# EUROPEAN PATENT APPLICATION

(11) **EP 4 757 266 A1**
(43) Date of publication of application: **10.06.2026**
(21) Application number: 24858677.8
(22) Date of filing: 29.08.2024
(51) Int. Cl.: H04L 41/06, H04L 12/40

(54) **COMMUNICATION METHOD, APPARATUS AND SYSTEM, AND VEHICLE**

(30) Priority: 31.08.2023 CN 202311125532
(71) Applicant: Yinwang Intelligent Technologies Co., Ltd., Shenzhen, Guangdong 518129 (CN)
(72) Inventor: ZHANG, Xingxin, Shenzhen, Guangdong 518129 (CN); WANG, Xuehuan, Shenzhen, Guangdong 518129 (CN)
(74) Representative: Pfenning, Meinig & Partner mbB
(86) International application number: PCT/CN2024/115504
(87) International publication number: WO 2025/045146

(57) **Abstract**

A communication method, apparatus, and system, and a vehicle are provided. The communication method may be applied to an audio system. The audio system includes a primary node and a plurality of secondary nodes including a first secondary node. When determining that a first exception associated with the first secondary node occurs, the first secondary node sends a first uplink frame in a first time period. The first uplink frame carries first exception information, and the first exception information indicates that the first exception occurs. The first time period is determined based on an attribute of the first secondary node, or the first time period is included in an exception reporting cycle of a first secondary node group. The first secondary node group includes the first secondary node. An exception is reported in the exception reporting cycle when the exception occurs on at least one secondary node in the first secondary node group. According to technical solutions of this application, an opportunity of reporting an exception by a secondary node can be increased, thereby improving efficiency of reporting the exception.

## Description

This application claims priority to Chinese Patent Application No. 202311125532.3, filed with the China National Intellectual Property Administration on August 31, 2023 and entitled "COMMUNICATION METHOD, APPARATUS, AND SYSTEM, AND VEHICLE", which is incorporated herein by reference in its entirety.

### TECHNICAL FIELD

This application relates to the field of audio transmission, and more specifically, to a communication method, apparatus, and system, and a vehicle.

### BACKGROUND

A wired audio system of a vehicle usually includes one audio control device and a plurality of audio devices. The audio control device is usually connected to the plurality of audio devices in a daisy chain networking manner. The audio control device sends, through an audio bus, audio data that needs to be played to one or more audio devices for playing. The audio device transmits audio data collected by the audio device to the audio control device through the audio bus.

When the audio control device is connected to the plurality of audio devices in the daisy chain networking manner, when an exception occurs on the audio device, how to improve efficiency of reporting the exception to the audio control device becomes an urgent problem to be resolved.

### SUMMARY

This application provides a communication method, apparatus, and system, and a vehicle, to increase an opportunity of reporting an exception by a secondary node, thereby improving efficiency of reporting the exception by the secondary node.

According to a first aspect, a communication method is provided. The method is applied to a first secondary node. The method includes: determining that a first exception occurs, where the first exception is associated with the first secondary node; and sending a first uplink frame in a first time period, where the first uplink frame carries first exception information, the first exception information indicates that the first exception occurs, and the first time period is associated with the first secondary node.

That the first exception is associated with the first secondary node may include at least one of the following: An exception occurs on the first secondary node, or an exception occurs on an external device (referred to as a peripheral device) connected to the first secondary node.

For example, the first time period is included in one uplink frame transmission cycle.

In some possible implementations, the first uplink frame may be in any one of the following forms:
(1) The first uplink frame includes one exception indication field. The exception indication field may be used to carry one or more pieces of exception information, and each piece of exception information indicates that an exception occurs on one secondary node.
(2) The first uplink frame includes two or more exception indication fields. Each exception indication field may be used to carry one or more pieces of exception information, and each piece of exception information indicates that an exception occurs on one secondary node.
(3) The first uplink frame includes one or more exception indication fields. Each exception indication field may be used to carry one or more pieces of exception information, and each piece of exception information indicates that an exception occurs on one secondary node. In addition, the first uplink frame further includes one first field. The first field may carry uplink information of a specific secondary node, or the first field may be used to carry one or more pieces of exception information.

In the foregoing technical solution, a plurality of secondary nodes can separately report exceptions in different uplink frame transmission cycles, so that exception information between the secondary nodes that report the exceptions in the different cycles does not overwrite each other. Therefore, a probability that information that indicates an exception and that is carried in an uplink frame is overwritten can be reduced, thereby increasing an opportunity of reporting the exception by the secondary node, and improving efficiency of reporting the exception by the secondary node.

With reference to the first aspect, in some implementations of the first aspect, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

In some possible implementations, a plurality of secondary nodes with a same attribute may report exceptions in a same uplink frame transmission cycle, and secondary nodes with different attributes cannot report exceptions in a same uplink frame transmission cycle.

In the foregoing technical solution, the secondary nodes with different attributes can separately report the exceptions in different uplink frame transmission cycles, so that exception information between the secondary nodes with different attributes does not overwrite each other, thereby increasing an opportunity of reporting the exception by the secondary node, and improving efficiency of reporting the exception by the secondary node.

With reference to the first aspect, in some implementations of the first aspect, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

In the foregoing technical solution, a plurality of secondary node groups are preset, so that secondary nodes in different secondary node groups can separately report exceptions in different uplink frame transmission cycles, so that exception information between the secondary nodes in different secondary node groups does not overwrite each other, thereby increasing an opportunity of reporting the exception by the secondary node, and improving efficiency of reporting the exception by the secondary node.

With reference to the first aspect, in some implementations of the first aspect, before sending the first uplink frame in the first time period, the method further includes: receiving a second uplink frame that carries second exception information, where the second exception information indicates that a second exception occurs on a second secondary node; and sending the first uplink frame in the first time period includes: when a reporting priority of the first exception is higher than a reporting priority of the second exception, sending the first uplink frame in the first time period.

In some implementations, if no idle field in the second uplink frame can carry the first exception information, when the reporting priority of the first exception is higher than the reporting priority of the second exception, the first exception information is used to overwrite the second exception information to obtain the first uplink frame, and the first uplink frame is sent in the first time period.

In some possible implementations, a higher reporting priority of an exception indicates a higher emergency degree of the exception, and the exception needs to be resolved as soon as possible.

In the foregoing technical solution, the exception information carried in the uplink frame may be determined based on the reporting priority of the exception. When the uplink frame received by the secondary node does not include the idle field to carry the exception information, and the reporting priority of the exception of the current secondary node is higher, the exception information of the current secondary node is used to overwrite the exception information with a lower reporting priority. This helps accelerate a speed of resolving an exception with a higher emergency degree, thereby improving reliability of a system in which the first secondary node is located.

With reference to the first aspect, in some implementations of the first aspect, the second secondary node and the first secondary node belong to a same secondary node group.

In some possible implementations, that the second secondary node and the first secondary node belong to the same secondary node group may be understood as follows: The second secondary node and the first secondary node may report the exceptions in a same uplink frame transmission cycle.

With reference to the first aspect, in some implementations of the first aspect, the first uplink frame includes a first exception indication field, and the first exception indication field carries the first exception information.

With reference to the first aspect, in some implementations of the first aspect, the first uplink frame includes a second exception indication field and a third exception indication field, the second exception indication field carries the first exception information, and the third exception indication field is not occupied or the third exception indication field carries third exception information indicating that a third exception occurs on a third secondary node.

In the foregoing technical solution, at least two secondary nodes with a same attribute or at least two secondary nodes in a same secondary node group can report exceptions in one uplink frame. This can increase an opportunity of reporting the exception by the secondary node, and improve efficiency of reporting the exception by the secondary node.

With reference to the first aspect, in some implementations of the first aspect, before sending the first uplink frame in the first time period, the method further includes: receiving a third uplink frame, where the third uplink frame includes the second exception indication field and the third exception indication field; and sending the first uplink frame in the first time period includes: when the second exception indication field is not occupied and the third exception indication field carries the third exception information indicating that the third exception occurs on the third secondary node, sending the first uplink frame in the first time period, where the third exception indication field of the first uplink frame carries the third exception information.

In the foregoing technical solution, the first secondary node uses an unoccupied exception indication field to carry the first exception information. This can avoid overwriting by other exception information, and helps improve efficiency of reporting the exception by the secondary node.

With reference to the first aspect, in some implementations of the first aspect, the third secondary node and the first secondary node belong to a same secondary node group, or the third secondary node and the first secondary node belong to different node groups.

With reference to the first aspect, in some implementations of the first aspect, when the third exception indication field is not occupied, a value of the third exception indication field is a specific value; or when the third exception indication field carries the first exception information, the value of the third exception indication field is a non-specific value.

For example, if the third exception indication field indicates, by using a character string, whether an exception occurs on a secondary node, the specific value may be a value represented by a character string consisting entirely of "0"s, and the non-specific value may be a value represented by a character string not entirely composed of "0"s.

In the foregoing technical solution, the specific value is set, so that the secondary node can quickly determine an unoccupied exception indication field, thereby reducing a delay in sending an uplink frame indicating that the exception occurs on the secondary node, and helping improve efficiency of reporting the exception.

With reference to the first aspect, in some implementations of the first aspect, the method further includes: receiving a first downlink frame, where the first downlink frame includes an indication bit; and the indication bit indicates that a first field in an uplink frame is used to carry information about an exception of a secondary node, or indicates that the first field is used to carry uplink information of a specific secondary node.

In some possible implementations, the first secondary node receives the first downlink frame, extracts, from the first downlink frame, data that a primary node needs to send to the first downlink frame, and forwards the first downlink frame. That is, a downlink frame sent by the first secondary node to a downlink does not include the data sent by the primary node to the first secondary node.

With reference to the first aspect, in some implementations of the first aspect, the first uplink frame includes a fourth exception indication field, the fourth exception indication field carries the first exception information, and the fourth exception indication field is further used to carry information about an exception of another secondary node.

With reference to the first aspect, in some implementations of the first aspect, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

In the foregoing technical solution, a plurality of bits of one exception indication field carry information about exceptions of the plurality of secondary nodes, so that the plurality of secondary nodes can simultaneously report the exceptions with a small quantity of uplink resources occupied.

For example, the another secondary node may include a fourth secondary node.

With reference to the first aspect, in some implementations of the first aspect, before sending the first uplink frame in the first time period, the method further includes: receiving a fourth uplink frame, where the fourth uplink frame includes the fourth exception indication field, the fourth exception indication field carries fourth exception information, and the fourth exception information indicates that a fourth exception occurs on the fourth secondary node; and sending the first uplink frame in the first time period includes: sending, in the first time period by using the fourth exception indication field, the first uplink frame that carries the first exception information and the fourth exception information.

With reference to the first aspect, in some implementations of the first aspect, the fourth secondary node and the first secondary node belong to a same secondary node group.

With reference to the first aspect, in some implementations of the first aspect, the method further includes: receiving a fifth uplink frame, where the fifth uplink frame carries fifth exception information, and the fifth exception information indicates that a fifth exception occurs on a fifth secondary node; and when the fifth uplink frame does not include an idle field used to carry the first exception information, sending a sixth uplink frame, where the sixth uplink frame carries the fifth exception information.

For example, the fifth uplink frame and the sixth uplink frame can carry only one piece of exception information.

In some possible implementations, when the first secondary node receives the fifth uplink frame, and the fifth uplink frame does not include the idle field used to carry the first exception information, the first secondary node may add data that the first secondary node needs to send to the primary node to the fifth uplink frame to generate the sixth uplink frame, and send the sixth uplink frame. That is, the data is added to the fifth uplink frame sent by the first secondary node to an uplink.

In the foregoing technical solution, when an uplink frame already carries exception information, the first secondary node suspends reporting an exception, to avoid overwriting exception information of a secondary node in the downlink of the first secondary node.

With reference to the first aspect, in some implementations of the first aspect, the fifth uplink frame and the sixth uplink frame include at least one exception indication field and a second field, the at least one exception indication field carries the fifth exception information, the second field carries sixth exception information, and the sixth exception information indicates that a sixth exception occurs on a sixth secondary node; or the second field is used to carry uplink information of a specific secondary node.

For example, the second field and the first field may be a same field.

In the foregoing technical solution, when the uplink frame does not include the idle field to carry the first exception information, the first secondary node suspends reporting the exception, to avoid overwriting the exception information of the secondary node in the downlink of the first secondary node.

With reference to the first aspect, in some implementations of the first aspect, the fifth uplink frame and the sixth uplink frame include at least two exception indication fields, one of the at least two exception indication fields carries the fifth exception information, at least one of remaining fields of the at least two exception indication fields is not occupied, and sending the sixth uplink frame includes: sending the sixth uplink frame when the fifth secondary node and the first secondary node belong to different secondary node groups.

In the foregoing technical solution, when the first secondary node receives exception information of secondary nodes in different secondary node group, it indicates that an uplink frame transmission cycle is not the exception reporting cycle of the secondary node group in which the first secondary node is located. In this case, even if an uplink frame has an unoccupied idle field, the first secondary node suspends reporting the exception, to avoid overwriting exception information of a secondary node in another secondary node group.

With reference to the first aspect, in some implementations of the first aspect, sending the fifth uplink frame includes: sending the sixth uplink frame in a second time period, where the second time period is associated with the fifth secondary node.

For example, that the second time period is associated with the fifth secondary node may include: The second time period is determined based on an attribute of the fifth secondary node; and/or the second time period is included in an exception reporting cycle of a second secondary node group, where the second secondary node group includes the fifth secondary node, and an exception is reported in the exception reporting cycle when the exception occurs on at least one secondary node in the second secondary node group.

With reference to the first aspect, in some implementations of the first aspect, the method further includes: determining that a seventh exception occurs on the first secondary node; receiving a seventh uplink frame, where the seventh uplink frame indicates that an eighth exception occurs on the sixth secondary node; and when a reporting priority of the seventh exception is lower than or equal to a reporting priority of the eighth exception, and the seventh uplink frame does not include an idle field used to carry information indicating the seventh exception, sending an eighth uplink frame in a third time period, where the eighth uplink frame indicates the eighth exception, and the third time period is associated with the first secondary node.

For example, that the third time period is associated with the first secondary node may include: The third time period is determined based on the attribute of the first secondary node; and/or the third time period is included in the exception reporting cycle of the first secondary node group.

In the foregoing technical solution, when exceptions indicated by received uplink frames are all higher than or equal to the seventh exception of the first secondary node, the first secondary node suspends reporting the exception. This can accelerate a speed of resolving an exception with a higher emergency degree, and help improve reliability of the system in which the first secondary node is located.

With reference to the first aspect, in some implementations of the first aspect, the first exception includes at least one of the following: an exception of information transmission of the first secondary node, an exception of a parameter of the first secondary node, and an exception of the peripheral device associated with the first secondary node.

With reference to the first aspect, in some implementations of the first aspect, the first exception information further indicates the reporting priority of the first exception and/or a type of the first exception.

In the foregoing technical solution, the first exception information indicates the reporting priority of the first exception and/or the type of the first exception. This helps the primary node promptly resolve the exception, and improves efficiency of processing the exception. Particularly, when the primary node receives the information about the exceptions of the plurality of secondary nodes, the primary node may preferentially process an exception with a higher reporting priority based on a reporting priority of each exception. When the exception information indicates the type of the first exception, the primary node does not need to query the exception when receiving the exception information, and can directly resolve the exception.

It should be noted that the exception information in this application is equivalent to information indicating that the exception occurs on the secondary node, and includes but is not limited to the first exception information, the second exception information, the third exception information, and the like.

In some possible implementations, the first uplink frame further carries a check field, used to carry check information of checking the exception indication field, to improve transmission reliability of the exception information.

According to a second aspect, a communication method is provided. The method is applied to a first secondary node. The method includes: determining that a first exception occurs, where the first exception is associated with the first secondary node; and sending a first uplink frame, where the first uplink frame carries an exception indication field, the exception indication field indicates whether exceptions occur on at least two secondary nodes, the exception indication field carries first exception information, and the first exception information indicates that the first exception occurs.

In the foregoing technical solution, different secondary nodes can report exceptions in one uplink frame. This can increase an opportunity of reporting an exception by a secondary node, and improve efficiency of reporting the exception by the secondary node.

It should be noted that for beneficial effect of the technical solution in another implementation of the second aspect, refer to the related descriptions in the first aspect. Details are not described herein again.

With reference to the second aspect, in some implementations of the second aspect, the first uplink frame includes a second exception indication field and a third exception indication field, the second exception indication field carries the first exception information, and the third exception indication field is not occupied or the third exception indication field carries third exception information indicating that a third exception occurs on a third secondary node.

With reference to the second aspect, in some implementations of the second aspect, before sending the first uplink frame, the method further includes: receiving a third uplink frame, where the third uplink frame includes the second exception indication field and the third exception indication field; and sending the first uplink frame includes: when the second exception indication field carries second exception information indicating that a second exception occurs on a second secondary node, the third exception indication field carries the third exception information indicating that the third exception occurs on the third secondary node, and a reporting priority of the first exception is higher than a reporting priority of the second exception, sending the first uplink frame; or when the second exception indication field is not occupied and the third exception indication field carries the third exception information, sending the first uplink frame, where the third exception indication field of the first uplink frame carries the third exception information.

With reference to the second aspect, in some implementations of the second aspect, when the second exception indication field is not occupied, a value of the second exception indication field is a specific value; or when the second exception indication field carries the first exception information or the second exception information, the value of the second exception indication field is a non-specific value.

With reference to the second aspect, in some implementations of the second aspect, the first exception information further indicates the reporting priority of the first exception and/or a type of the first exception.

With reference to the second aspect, in some implementations of the second aspect, the method further includes: receiving a first downlink frame, where the first downlink frame includes an indication bit; and the indication bit indicates that a first field in an uplink frame is used to carry information about an exception of a secondary node, or indicates that the first field is used to carry uplink information of a specific secondary node.

With reference to the second aspect, in some implementations of the second aspect, the first uplink frame includes a fourth exception indication field, the fourth exception indication field carries the first exception information, and the fourth exception indication field is further used to carry information about an exception of another secondary node.

With reference to the second aspect, in some implementations of the second aspect, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

With reference to the second aspect, in some implementations of the second aspect, before sending the first uplink frame, the method further includes: receiving a fourth uplink frame, where the fourth uplink frame includes the fourth exception indication field, the fourth exception indication field carries fourth exception information, and the fourth exception information indicates that a fourth exception occurs on a fourth secondary node; and sending the first uplink frame includes: sending, by using the fourth exception indication field, the first uplink frame that carries the first exception information and the fourth exception information.

With reference to the second aspect, in some implementations of the second aspect, sending the first uplink frame includes: sending the first uplink frame in a first time period, where the first time period is associated with the first secondary node.

With reference to the second aspect, in some implementations of the second aspect, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

With reference to the second aspect, in some implementations of the second aspect, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

With reference to the second aspect, in some implementations of the second aspect, the method further includes: receiving a fifth uplink frame, where all exception indication fields that are in the fifth uplink frame and that indicate that exceptions occur on secondary nodes have been occupied; and when the fifth uplink frame does not include an idle field used to carry the first exception information, sending a sixth uplink frame, where the sixth uplink frame carries fifth exception information.

With reference to the second aspect, in some implementations of the second aspect, reporting priorities of the exceptions indicated in the fifth uplink frame are all higher than or equal to the reporting priority of the first exception.

With reference to the second aspect, in some implementations of the second aspect, the first exception includes at least one of the following: an exception of information transmission of the first secondary node, an exception of a parameter of the first secondary node, and an exception of a peripheral device associated with the first secondary node.

According to a third aspect, a communication method is provided. The method includes: receiving a first uplink frame in a first time period, where the first uplink frame carries first exception information, the first exception information indicates that a first exception occurs, the first exception is associated with a first secondary node, and the first time period is associated with the first secondary node; and determining, based on the first exception information, that the first exception occurs.

With reference to the third aspect, in some implementations of the third aspect, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

With reference to the third aspect, in some implementations of the third aspect, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

With reference to the third aspect, in some implementations of the third aspect, receiving the first uplink frame in the first time period includes: when a second exception occurs on a second secondary node, and a reporting priority of the second exception is lower than a reporting priority of the first exception, receiving the first uplink frame in the first time period, where the first secondary node and the second secondary node belong to a same secondary node group.

With reference to the third aspect, in some implementations of the third aspect, the first exception information further indicates the reporting priority of the first exception and/or a type of the first exception.

With reference to the third aspect, in some implementations of the third aspect, the first uplink frame includes a first exception indication field, and the first exception indication field carries the first exception information.

With reference to the third aspect, in some implementations of the third aspect, the first uplink frame includes a second exception indication field and a third exception indication field, the second exception indication field carries the first exception information, and the third exception indication field carries third exception information indicating that a third exception occurs on a third secondary node, or the third exception indication field is not occupied.

With reference to the third aspect, in some implementations of the third aspect, the third secondary node and the first secondary node belong to a same secondary node group, or the third secondary node and the first secondary node belong to different node groups.

With reference to the third aspect, in some implementations of the third aspect, when the third exception indication field is not occupied, a value of the third exception indication field is a specific value; or when the third exception indication field carries the third exception information, the value of the third exception indication field is a non-specific value.

With reference to the third aspect, in some implementations of the third aspect, the method further includes: sending a first downlink frame, where the first downlink frame includes an indication bit; and the indication bit indicates that a first field in an uplink frame is used to carry information about an exception of a secondary node, or indicates that the first field is used to carry uplink information of a specific secondary node.

With reference to the third aspect, in some implementations of the third aspect, the first uplink frame includes a fourth exception indication field, the fourth exception indication field carries the first exception information, and the fourth exception indication field is further used to carry information about an exception of another secondary node.

With reference to the third aspect, in some implementations of the third aspect, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

With reference to the third aspect, in some implementations of the third aspect, the method further includes: receiving a sixth uplink frame in a second time period, where the sixth uplink frame carries fifth exception information, the fifth exception information indicates that a fifth exception occurs on a fifth secondary node, the second time period is associated with the fifth secondary node, and the fifth secondary node and the first secondary node belong to different secondary node groups.

With reference to the third aspect, in some implementations of the third aspect, the first exception includes at least one of the following: an exception of information transmission of the first secondary node, an exception of a parameter of the first secondary node, and an exception of a peripheral device associated with the first secondary node.

According to a fourth aspect, a communication method is provided. The method includes: receiving a first uplink frame, where the first uplink frame carries an exception indication field, the exception indication field indicates whether exceptions occur on at least two secondary nodes, the exception indication field carries first exception information, the first exception information indicates that a first exception occurs, and the first exception is associated with a first secondary node; and determining, based on the first exception information, that the first exception occurs.

With reference to the fourth aspect, in some implementations of the fourth aspect, the first uplink frame includes a second exception indication field and a third exception indication field, the second exception indication field carries the first exception information, and the third exception indication field carries third exception information indicating that a third exception occurs on a third secondary node, or the third exception indication field is not occupied.

With reference to the fourth aspect, in some implementations of the fourth aspect, when the third exception indication field is not occupied, a value of the third exception indication field is a specific value; or when the third exception indication field carries the third exception information, the value of the third exception indication field is a non-specific value.

With reference to the fourth aspect, in some implementations of the fourth aspect, the first exception information further indicates a reporting priority of the first exception and/or a type of the first exception.

With reference to the fourth aspect, in some implementations of the fourth aspect, the method further includes: sending a first downlink frame, where the first downlink frame includes an indication bit; and the indication bit indicates that a first field in an uplink frame is used to carry information about an exception of a secondary node, or indicates that the first field is used to carry uplink information of a specific secondary node.

With reference to the fourth aspect, in some implementations of the fourth aspect, the first uplink frame includes a fourth exception indication field, the fourth exception indication field carries the first exception information, and the fourth exception indication field is further used to carry information about an exception of another secondary node.

With reference to the fourth aspect, in some implementations of the fourth aspect, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

With reference to the fourth aspect, in some implementations of the fourth aspect, receiving the first uplink frame includes: receiving the first uplink frame in a first time period, where the first time period is associated with the first secondary node.

With reference to the fourth aspect, in some implementations of the fourth aspect, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

With reference to the fourth aspect, in some implementations of the fourth aspect, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

With reference to the fourth aspect, in some implementations of the fourth aspect, the first exception includes at least one of the following: an exception of information transmission of the first secondary node, an exception of a parameter of the first secondary node, and an exception of a peripheral device associated with the first secondary node.

For beneficial effect of the technical solutions in the third aspect and the fourth aspect, refer to the related descriptions in the first aspect. Details are not described herein again.

According to a fifth aspect, a communication apparatus is provided. The apparatus includes a processing unit and a transceiver unit, and is configured to perform the method in any possible implementation of the first aspect or the second aspect.

According to a sixth aspect, a communication apparatus is provided. The apparatus includes a transceiver unit and a processing unit, and is configured to perform the method in any possible implementation of the third aspect or the fourth aspect.

According to a seventh aspect, a communication apparatus is provided. The apparatus includes: a memory, configured to store a computer program; and a processor, configured to execute the computer program stored in the memory, so that the apparatus performs the method in any possible implementation of the first aspect or the second aspect.

According to an eighth aspect, a communication apparatus is provided. The apparatus includes: a memory, configured to store a computer program; and a processor, configured to execute the computer program stored in the memory, so that the apparatus performs the method in any possible implementation of the third aspect or the fourth aspect.

According to a ninth aspect, a communication system is provided. The system includes the apparatus in any possible implementation of the fifth aspect and the apparatus in any possible implementation of the sixth aspect. Alternatively, the system includes the apparatus in any possible implementation of the seventh aspect and the apparatus in any possible implementation of the eighth aspect.

According to a tenth aspect, a vehicle is provided. The vehicle includes the system in any possible implementation of the ninth aspect; or the vehicle includes the apparatus in any possible implementation of the fifth aspect and the apparatus in any possible implementation of the sixth aspect; or the vehicle includes the apparatus in any possible implementation of the seventh aspect and the apparatus in any possible implementation of the eighth aspect.

According to an eleventh aspect, a computer program product is provided. The computer program product includes computer program code. When the computer program code is run on a computer, the computer is enabled to perform the method in any possible implementation of the first aspect to the fourth aspect.

It should be noted that the computer program code may be completely or partially stored in a first storage medium. The first storage medium may be encapsulated with a processor, or encapsulated separately from a processor.

According to a twelfth aspect, a computer-readable medium is provided. The computer-readable medium stores instructions, and when the instructions are executed by a processor, the processor is enabled to implement the method in any possible implementation of the first aspect to the fourth aspect.

According to a thirteenth aspect, a chip is provided. The chip includes a circuit, and the circuit is configured to perform the method in any possible implementation of the first aspect to the fourth aspect.

### BRIEF DESCRIPTION OF DRAWINGS

FIG. 1 is a block diagram of an audio system according to an embodiment of this application;
FIG. 2 is another block diagram of an audio system according to an embodiment of this application;
FIG. 3 is a block diagram of a vehicle according to an embodiment of this application;
FIG. 4 is a schematic flowchart of a communication method according to an embodiment of this application;
FIG. 5 is a block diagram of an uplink frame according to an embodiment of this application;
FIG. 6 is another block diagram of an uplink frame according to an embodiment of this application;
FIG. 7 is still another block diagram of an uplink frame according to an embodiment of this application;
FIG. 8 is yet another block diagram of an uplink frame according to an embodiment of this application;
FIG. 9(a) and FIG. 9(b) are another schematic flowchart of a communication method according to an embodiment of this application;
FIG. 10 is still another schematic flowchart of a communication method according to an embodiment of this application;
FIG. 11 is yet another schematic flowchart of a communication method according to an embodiment of this application;
FIG. 12A and FIG. 12B are still yet another schematic flowchart of a communication method according to an embodiment of this application;
FIG. 13 is a block diagram of a communication apparatus according to an embodiment of this application;
FIG. 14 is another block diagram of a communication apparatus according to an embodiment of this application; and
FIG. 15 is still another block diagram of a communication apparatus according to an embodiment of this application.

### DESCRIPTION OF EMBODIMENTS

The following describes technical solutions of this application with reference to accompanying drawings.

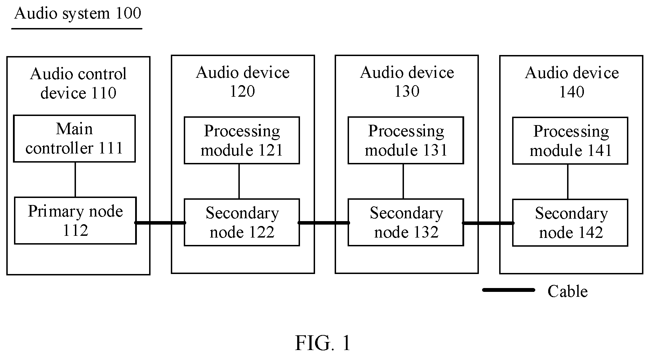

FIG. 1 is a diagram of an audio system according to an embodiment of this application. As shown in FIG. 1, the audio system 100 includes an audio control device 110, an audio device 120, an audio device 130, and an audio device 140. The audio control device 110 includes a main controller 111 and a primary node 112. The audio device 120 includes a processing module 121 and a secondary node 122. The audio device 130 includes a processing module 131 and a secondary node 132. The audio device 140 includes a processing module 141 and a secondary node 142. The primary node 112 is connected to the secondary node 122, the secondary node 132, and the secondary node 142 through a cable in a daisy chain networking manner. The secondary node 122, the secondary node 132, and the secondary node 142 may be apparatuses such as processors or transmission chips in the audio devices, respectively. The primary node 112 is configured for the audio control device 110 to communicate with the audio devices 120 to 140. In an example, the main controller 111 sends, to the processing module 140 of the audio device 140 in sequence by using the primary node 112, the secondary node 122, the secondary node 132, and the secondary node 142, audio data that needs to be played by the audio device 140. The processing module 141 controls playing of the audio data. In another example, audio data collected by the processing module 131 of the audio device 130 is sequentially transmitted to the main controller 111 by using the secondary node 132, the secondary node 122, and the primary node 112.

In a link including a primary node and a plurality of secondary nodes, a link on which a secondary node transmits information to the primary node or toward the primary node is an uplink, and a link on which the secondary node transmits information to a secondary node away from the primary node is a downlink. In addition, a link on which the primary node transmits information to a secondary node is a downlink. For example, the secondary node 132 is located on an uplink of the secondary node 142, and the secondary node 132 is located on a downlink of the secondary node 122. The secondary node 122, the secondary node 132, and the secondary node 142 are all located on a downlink of the primary node 112. A frame sent by the primary node or the secondary node on the downlink is a downlink frame, and a frame sent by the secondary node on the uplink is an uplink frame.

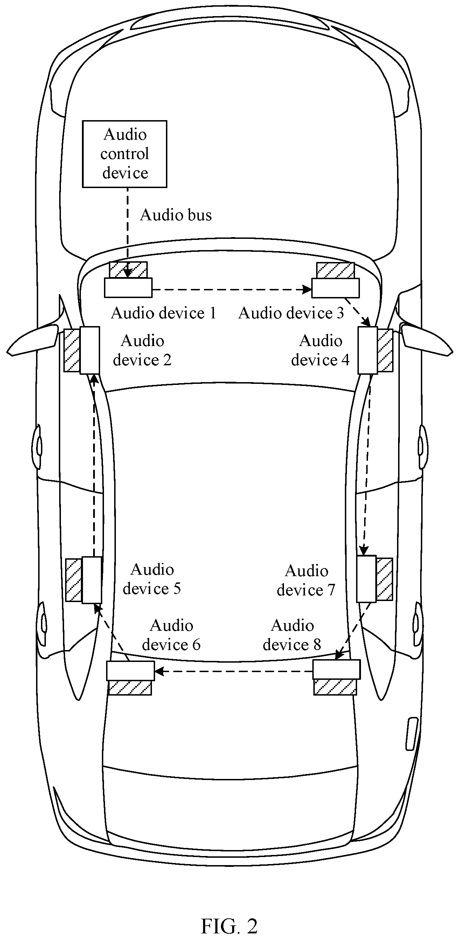

FIG. 2 is a diagram of distribution of an audio system in a vehicle according to an embodiment of this application. As shown in FIG. 2, an audio control device is connected to audio devices 1 to 8 in a daisy chain networking manner. The audio device 1 and the audio device 3, the audio device 3 and the audio device 4, the audio device 4 and the audio device 7, the audio device 7 and the audio device 8, the audio device 8 and the audio device 6, the audio device 6 and the audio device 5, and the audio device 5 and the audio device 2 may be separately connected through in-vehicle audio buses. The audio control device may include the audio control device 110 shown in FIG. 1, and the audio devices 1 to 8 may include one or more of the audio device 120, the audio device 130, and the audio device 140 shown in FIG. 1. For example, the audio device 1 may be the audio device 120 shown in FIG. 1, one or more of the audio device 3, the audio device 4, the audio device 7, and the audio device 8 may be the audio device 130 shown in FIG. 1, and one or more of the audio device 6, the audio device 5, and the audio device 2 may be the audio device 140 shown in FIG. 1.

For example, the audio devices 1 to 8 may include but are not limited to a head unit (head unit), a speaker, a microphone (microphone, MIC), and a power amplifier (audio power amplifier, APM).

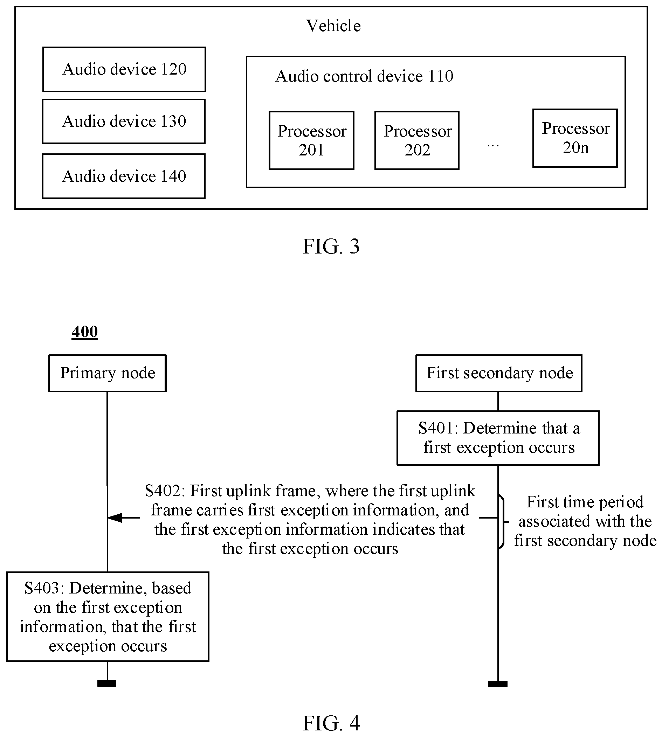

FIG. 3 is a functional diagram of a vehicle according to an embodiment of this application. As shown in FIG. 3, the vehicle includes the audio system 100 shown in FIG. 1. When the audio system 100 is disposed in the vehicle, the audio control device 110 may include any one of a vehicle domain controller (vehicle domain controller, VDC), an advanced driving domain controller (advanced driving domain controller, ADC), and a cockpit domain controller (cockpit domain controller, CDC). Alternatively, the audio control device 110 may further include but is not limited to an in-car application-server (in-car application-server, ICAS) controller, a body domain controller (body domain controller, BDC), a special equipment system (special equipment system, SAS), a media graphics unit (media graphics unit, MGU), a body super core (body super core, BSC), and an advanced driver assistance system super core (advanced driver assistance system super core, ADAS super core). An ICAS may include at least one of the following: a vehicle control server ICAS1, an intelligent driving server ICAS2, an intelligent cockpit server ICAS3, and an information entertainment server ICAS4.

The main controller 111 and the primary node 112 each may include one or more processors in the audio control device 110 shown in FIG. 3, for example, processors 201 to 20n (n is a positive integer).

It should be understood that FIG. 1 to FIG. 3 are merely examples for description. In an actual implementation process, the audio system 100 may include more or fewer secondary nodes. In other words, the audio system may include more or fewer audio devices.

In the current technical background, when an exception 1 occurs on a secondary node (referred to as a secondary node 1 below) in the audio system, the secondary node 1 may include information indicating the exception 1 in an uplink frame, to report the exception 1 to the primary node. However, when an exception (for example, an exception 2) occurs on a secondary node (referred to as a secondary node 2 below) located on an uplink of the secondary node, the information indicating the exception 1 in the uplink frame may be overwritten by information indicating the exception 2. As a result, the exception of the secondary node 1 cannot be reported to the primary node. In addition, after the secondary node 2 reports the exception, before the exception of the secondary node 2 is resolved, the secondary node 2 may still include the information indicating the exception 2 in a subsequent uplink frame. The information may still overwrite information indicating an exception reported by a secondary node located on a downlink of the secondary node 2. As a result, before the exception of the secondary node 2 is resolved, another secondary node located on the downlink of the secondary node 2 cannot report an exception to the primary node. Consequently, efficiency of reporting the exception by the secondary node is low.

In view of this, embodiments of this application provide a communication method, apparatus, and system, and a vehicle, to determine, based on an attribute of a secondary node, a cycle in which the secondary node reports an exception. When an exception occurs on a secondary node but a cycle in which the secondary node reports the exception does not arrive, the secondary node does not report the exception. In other words, a plurality of secondary nodes in an audio system separately report exceptions in at least two different cycles. This can reduce a probability that information that indicates an exception and that is carried in an uplink frame is overwritten, thereby increasing an opportunity of reporting the exception by the secondary node, and improving efficiency of reporting the exception by the secondary node.

It should be noted that the exception occurs on the secondary node in this application may be understood as follows: An exception associated with the secondary node occurs, for example, may include that the exception occurs on the secondary node, or may include that an exception occurs on a peripheral device connected to the secondary node.

The following describes specific implementations of the communication method provided in embodiments of this application with reference to FIG. 4 to FIG. 12B.

FIG. 4 is a schematic flowchart of a communication method according to an embodiment of this application. The method 400 may be performed by the audio system 100 shown in FIG. 1, or may be applied to the audio system shown in FIG. 2. For example, a primary node may be the primary node 112 in FIG. 1, and a first secondary node may be any one of the secondary node 120 to the secondary node 140 in FIG. 1. The first secondary node may be a secondary node connected to the primary node, or one or more secondary nodes may be connected between the first secondary node and the primary node. The method 400 includes the following steps.

S401: The first secondary node determines that a first exception occurs.

For example, the first exception may include but is not limited to: an exception of information transmission of the first secondary node, an exception of a parameter of the first secondary node, and an exception of a peripheral device associated with the first secondary node.

The peripheral device may include an external device connected to the secondary node, for example, an MIC, a speaker, or an APM.

For example, the exception of information transmission may include that information cannot continue to be transmitted due to a reason like a failure in checking a check field included in the information; the exception of the parameter may include that a parameter like a voltage or a temperature of the secondary node exceeds a preset range; and the exception of the peripheral device may include an exception of a status of the peripheral device or an exception on an interface for connecting the peripheral device to the secondary node.

S402: The first secondary node sends a first uplink frame in a first time period, where the first uplink frame carries first exception information, the first exception information indicates that the first exception occurs, and the first time period is associated with the first secondary node.

In some possible implementations, that the first time period is associated with the first secondary node may be understood as follows: The first time period is determined based on an attribute of the first secondary node. The attribute of the first secondary node includes but is not limited to: an identifier of the first secondary node, a service type of the first secondary node, and a topological location of the first secondary node.

The identifier of the first secondary node may uniquely identify an identity of the first secondary node. The topological location of the first secondary node indicates a location of the first secondary node in daisy chain networking. A service type of a secondary node includes but is not limited to an audio playing service, an audio recognition service, and an audio collection service; and the service type of the first secondary node may include at least one of the service types.

For example, it is preset that a secondary node with a first-type attribute reports an exception in an odd-numbered uplink frame, and a secondary node with a second-type attribute reports an exception in an even-numbered uplink frame. The first-type attribute may be a first service type, for example, the audio playing service; and the second-type attribute may be a second service type, for example, the audio collection service. Alternatively, the first-type attribute may be a first topological location, for example, an odd-numbered location in the daisy chain networking; and the second-type attribute may be a second topological location, for example, an even-numbered location in the daisy chain networking. The audio system shown in FIG. 2 is used as an example. In this case, odd-numbered locations in the daisy chain networking may be locations of the audio device 1, the audio device 4, the audio device 8, and the audio device 5, and even-numbered locations in the daisy chain networking may be locations of the audio device 3, the audio device 7, the audio device 6, and the audio device 2. For example, the odd-numbered uplink frame and the even-numbered uplink frame may be distinguished by using sequence numbers of uplink frames. For example, if the last digit of the sequence number is an odd number, the uplink frame is the odd-numbered uplink frame; or if the last digit of the sequence number is an even number, the uplink frame is the even-numbered uplink frame.

If the first secondary node is a secondary node with the first-type attribute, the first time period may be determined based on a transmission cycle of the odd-numbered uplink frame. For example, currently, an uplink frame transmitted by the secondary node is an odd-numbered uplink frame. If the first secondary node is a tail secondary node, the first time period may be a time period from a moment at which the first secondary node receives an odd-numbered downlink frame to a moment at which the first secondary node sends the odd-numbered uplink frame, or the first time period may be a time period from the moment at which the first secondary node receives the odd-numbered downlink frame to a moment at which the primary node receives the odd-numbered uplink frame. If the first secondary node is not a tail secondary node, the first time period may be a time period from a moment at which the first secondary node receives an odd-numbered uplink frame from a secondary node on an uplink to a moment at which the first secondary node sends the odd-numbered uplink frame, or the first time period may be a time period from the moment at which the first secondary node receives the odd-numbered uplink frame from the secondary node on the uplink to a moment at which the primary node receives the odd-numbered uplink frame. If the first secondary node is a secondary node with the second-type attribute, a manner of determining the first time period by the first secondary node is similar to the foregoing manner. Details are not described herein again.

It should be noted that classification into the secondary node with the first-type attribute and the secondary node with the second-type attribute is merely an example for description. In a specific implementation process, secondary nodes with more attributes may be further set. When there are secondary nodes with more than two types of attributes, for example, when there are secondary nodes with four types of attributes, the secondary nodes with the four types of attributes may be preset to separately report exceptions in four types of uplink frames, and the four types of uplink frames may be determined based on sequence numbers of the uplink frames. For example, if the sequence number of the uplink frame is represented by using a 2-bit binary code, the four types of uplink frames may be uplink frames whose sequence numbers are 00, 01, 10, and 11, respectively.

In some possible implementations, that the first time period is associated with the first secondary node may be further understood as follows: The first time period is included in an exception reporting cycle of a first secondary node group, the first secondary node group includes the first secondary node, and each secondary node in the first secondary node group may report an exception in the exception reporting cycle.

For example, the first secondary node group may be obtained by grouping secondary nodes based on attributes of the secondary nodes. For example, secondary nodes with the first-type attribute are determined as one secondary node group, and secondary nodes with the second-type attribute are determined as another secondary node group. Alternatively, the first secondary node group may be obtained by grouping the secondary nodes in another manner.

For example, the exception reporting cycle of the first secondary node group may be preset. For example, a transmission cycle of an uplink frame that carries a specific sequence number is preset as the exception reporting cycle of the first secondary node group. Alternatively, the exception reporting cycle of the first secondary node group may be determined in another manner.

In some possible implementations, the first exception information further indicates a reporting priority of the first exception and/or a type of the first exception. For example, the reporting priority of the first exception may indicate an emergency degree of the first exception. A higher reporting priority indicates a higher emergency degree. For example, the type of the first exception may include but is not limited to: the exception of information transmission of the first secondary node, the exception of the parameter of the first secondary node, and the exception of the peripheral device of the first secondary node. The first exception information indicates the reporting priority of the first exception and/or the type of the first exception. This helps the primary node promptly resolve the exception, and improves efficiency of processing the exception.

S403: The primary node receives the first uplink frame, and determines, based on the first exception information, that the first exception occurs.

In some possible implementations, after determining that the first exception occurs, the primary node may include, in a subsequently sent downlink frame, information used to resolve or rectify the first exception.

In some possible implementations, before sending the first uplink frame in the first time period, the method further includes: receiving an uplink frame, and generating the first uplink frame based on information carried in the uplink frame.

According to the communication method provided in this embodiment of this application, secondary nodes with different attributes can report exceptions in different cycles, so that exception information between the secondary nodes with different attributes does not overwrite each other. Therefore, a probability that information that indicates an exception and that is carried in an uplink frame is overwritten can be reduced, thereby increasing an opportunity of reporting the exception by the secondary node, and improving efficiency of reporting the exception by the secondary node.

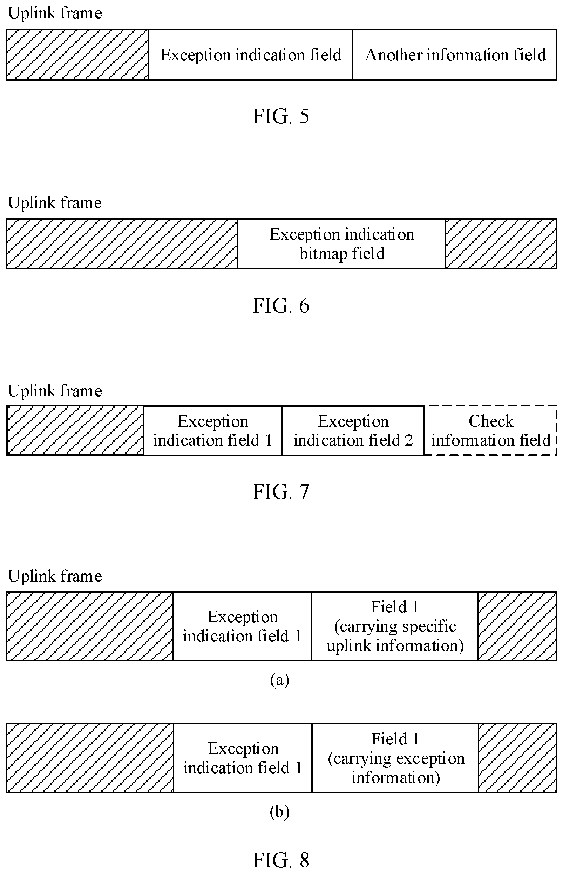

In this embodiment of this application, a structure of the uplink frame may include a plurality of forms. The following describes the structure of the uplink frame in this application with reference to FIG. 5 to FIG. 8.

In an implementation, the structure of the uplink frame may be shown in FIG. 5. The uplink frame includes one exception indication field and one another information field. The exception indication field may be used to carry one or more pieces of exception information, and each piece of exception information indicates that an exception occurs on one secondary node. The another information field may be used to carry information other than the exception information, for example, control information or service information.

In another implementation, the structure of the uplink frame may be shown in FIG. 6. The uplink frame includes one exception indication field, for example, an exception indication bitmap field, and the exception indication field is used to carry exception information indicating that an exception occurs on one or more secondary nodes. For example, the exception indication field may carry P bits, each of the P bits corresponds to one secondary node, and P is an integer greater than or equal to 2. A value of each bit may be a first value (for example, "1") or a second value (for example, "0"). When a value of a bit is the first value, it indicates that an exception occurs on a secondary node corresponding to the bit; or when the value of the bit is the second value, it indicates that no exception occurs on the secondary node corresponding to the bit. For example, there are six secondary nodes with the first-type attribute. An example in which the exception indication bitmap field carries 6 bits is used. Each of the 6 bits corresponds to one secondary node with the first-type attribute. When a value of a bit is 0, it indicates that no exception occurs on the secondary node; or when the value of the bit is 1, it indicates that an exception occurs on the secondary node. If a value of the exception indication bitmap field is 000110, it indicates that exceptions occur on secondary nodes corresponding to a 4^{th} bit and a 5^{th} bit. A shaded area shown in FIG. 6 may further carry information other than the exception information, for example, control information or service information.

In some scenarios, when a value of a bit in the P bits is the first value, the bit whose value is the first value may be considered as one piece of exception information; or when the value of the bit in the P bits is the first value, the P bits may be considered as one piece of exception information.

In still another implementation, the structure of the uplink frame may be shown in FIG. 7. The uplink frame includes two exception indication fields, for example, an exception indication field 1 and an exception indication field 2. The exception indication field 1 and the exception indication field 2 may be respectively used to carry exception information of secondary nodes with two types of attributes, or the exception indication field 1 and the exception indication field 2 may be used to carry exception information of secondary nodes with a same type. The uplink frame may further include a check information field used to carry information for checking the exception indication field, for example, cyclic redundancy check (cyclic redundancy check, CRC) information, Hamming code information, or the like. A shaded area shown in FIG. 7 may further carry information other than the exception information, for example, control information or service information.

In yet another implementation, the structure of the uplink frame may be shown in FIG. 8. The uplink frame includes one exception indication field and a first field, for example, an exception indication field 1 and a field 1. The exception indication field 1 may be used to carry exception information indicating that an exception occurs on one or more secondary nodes, and the field 1 may be used to carry specific uplink information, where the specific uplink information may include control information or service information, as shown in (a) in FIG. 8. Alternatively, the field 1 may be used to carry exception information, as shown in (b) in FIG. 8. For example, the specific uplink information may be uplink information of a specific secondary node, for example, inter-integrated circuit (inter-integrated circuit, I2C) information reported by the specific secondary node. Whether the field 1 is used to carry the specific uplink information or the exception information may be indicated by the primary node by using a downlink frame. A shaded area shown in FIG. 8 may further carry information other than the exception information, for example, control information or service information.

In some possible implementations, the shaded area shown in FIG. 5 to FIG. 8 further carries a sequence number of the uplink frame.

In some possible implementations, the implementations shown in FIG. 5 to FIG. 8 may be combined. For example, the exception indication field shown in FIG. 7 or FIG. 8 may be an exception indication bitmap field, to indicate, by using a plurality of bits, that exceptions occur on a plurality of secondary nodes.

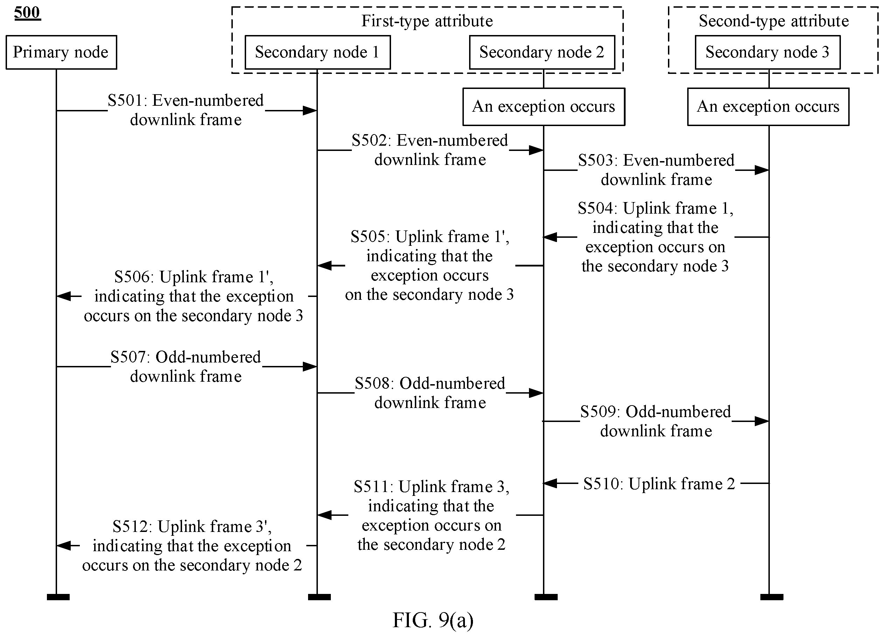

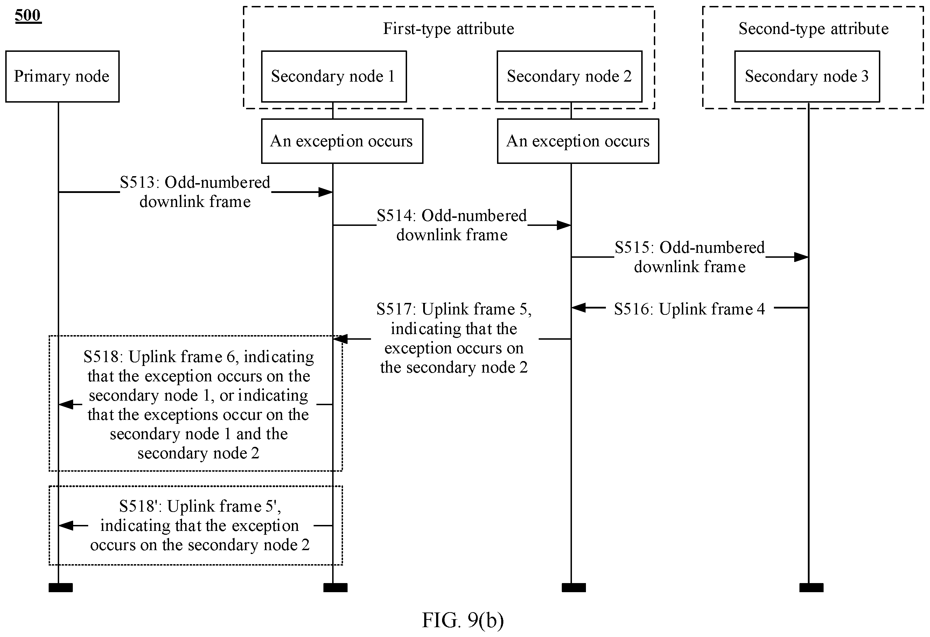

To help understand the method 400, the following describes an application scenario of the method 400 with reference to FIG. 9(a) and FIG. 9(b).

FIG. 9(a) and FIG. 9(b) are a schematic flowchart of a communication method according to an embodiment of this application. The method 500 may be performed by the audio system 100 shown in FIG. 1, or may be applied to the audio system shown in FIG. 2. For example, a primary node may be the primary node 112 in FIG. 1, and a secondary node 1 to a secondary node 3 may be the secondary node 120 to the secondary node 140 in FIG. 1, respectively. The secondary node 1 and the secondary node 2 are secondary nodes with a first-type attribute, and the secondary node 3 is a secondary node with a second-type attribute. A secondary node with the first-type attribute is preconfigured to report an exception in an odd-numbered uplink frame, and a secondary node with the second-type attribute is preconfigured to report an exception in an even-numbered uplink frame. Specifically, as shown in FIG. 9(a), the method 500 may include S501 to S512.

S501: The primary node sends an even-numbered downlink frame to the secondary node 1.

S502: The secondary node 1 sends an even-numbered downlink frame to the secondary node 2.

In some possible implementations, when or after receiving the even-numbered downlink frame, the secondary node 1 extracts, from the even-numbered downlink frame, data that is transmitted by the primary node to the secondary node 1, and sends the even-numbered downlink frame from which the data is extracted to the secondary node 2. In other words, the even-numbered downlink frame sent by the secondary node 1 to the secondary node 2 misses at least the data that is transmitted by the primary node to the secondary node 1 compared with the even-numbered downlink frame sent by the primary node to the secondary node 1.

S503: The secondary node 2 sends an even-numbered downlink frame to the secondary node 3.

In some possible implementations, when or after receiving the even-numbered downlink frame, the secondary node 2 extracts, from the even-numbered downlink frame, data that is transmitted by the primary node to the secondary node 2, and sends the even-numbered downlink frame from which the data is extracted to the secondary node 3. In other words, the even-numbered downlink frame sent by the secondary node 2 to the secondary node 3 misses at least the data that is transmitted by the primary node to the secondary node 2 compared with the even-numbered downlink frame sent by the secondary node 1 to the secondary node 2. S504: The secondary node 3 sends an uplink frame 1 to the secondary node 2, where the uplink frame 1 indicates that an exception occurs on the secondary node 3.

For example, when determining that the exception occurs and receiving the even-numbered downlink frame, the secondary node 3 may indicate, by using an even-numbered uplink frame determined based on the even-numbered downlink frame, for example, the uplink frame 1, that the exception occurs on the secondary node 3.

S505: The secondary node 2 sends an uplink frame 1' to the secondary node 1.

In some possible implementations, when or after receiving the uplink frame 1, the secondary node 2 adds, to the uplink frame 1, data that the secondary node 2 needs to send to the primary node, to obtain the uplink frame 1', and sends the uplink frame 1' to which the data is added to the secondary node 1. In other words, the uplink frame 1 sent by the secondary node 3 to the secondary node 2 misses at least the data that is transmitted by the secondary node 2 to the primary node compared with the uplink frame 1' sent by the secondary node 2 to the secondary node 1.

S506: The secondary node 1 sends an uplink frame 1" to the primary node.

In some possible implementations, when or after receiving the uplink frame 1', the secondary node 1 adds, to the uplink frame 1', data that the secondary node 1 needs to send to the primary node, to obtain the uplink frame 1", and sends the uplink frame 1" to which the data is added to the primary node. In other words, the uplink frame 1' sent by the secondary node 2 to the secondary node 1 misses at least the data that is transmitted by the secondary node 1 to the primary node compared with the uplink frame 1" sent by the secondary node 1 to the primary node.

It should be noted that if both exceptions occur on the secondary node 2 and the secondary node 3, because the uplink frame 1 to the uplink frame 1" sent in this case are even-numbered uplink frames, the secondary node 3 with the second-type attribute may report the exception by using the uplink frame 1 to the uplink frame 1", but the secondary node 1 with the first-type attribute and the secondary node 2 with the first-type attribute cannot report exceptions by using the uplink frame 1 to the uplink frame 1".

Therefore, the secondary node 1 and the secondary node 2 forward only the uplink frame.

It should be further noted that the "forward only the uplink frame" is used to restrict the secondary node 1 and the secondary node 2 from changing exception information in the uplink frame. However, it is not excluded that the secondary node 1 and the secondary node 2 add and/or delete, to the uplink frame and/or from the uplink frame, content other than the exception information in the uplink frame, for example, data that the secondary node needs to report to the primary node. In other words, compared with an uplink frame received by the secondary node 1 (or the secondary node 2), the uplink frame forwarded by the secondary node 1 (or the secondary node 2) may include additional data of the secondary node 1 (or the secondary node 2), or include additional other content other than the exception information.

S507: The primary node sends an odd-numbered downlink frame to the secondary node 1.

In some possible implementations, the primary node may determine, based on the uplink frame 1", that the exception occurs on the secondary node 3, and include information 1 used to resolve the exception of the secondary node 3 in the odd-numbered downlink frame.

S508: The secondary node 1 sends an odd-numbered downlink frame to the secondary node 2.

S509: The secondary node 2 sends an odd-numbered downlink frame to the secondary node 3.

S510: The secondary node 3 sends an uplink frame 2 to the secondary node 2.

In some possible implementations, the secondary node 3 processes the exception of the secondary node 3 based on the information 1 carried in the odd-numbered uplink frame.

For example, when receiving the odd-numbered downlink frame, the secondary node 3 may determine an odd-numbered uplink frame based on the odd-numbered downlink frame, for example, the uplink frame 2, and send the odd-numbered uplink frame.

In a scenario, when the secondary node 3 sends the uplink frame 2, the exception of the secondary node 3 is not resolved yet. In this case, the secondary node 3 may still need to report the exception. However, because the currently sent uplink frame 2 is an odd-numbered uplink frame, the secondary node 3 is not allowed to report the exception by using the uplink frame 2.

S511: The secondary node 2 sends an uplink frame 3 to the secondary node 1, where the uplink frame 3 indicates that the exception occurs on the secondary node 2.

For example, when determining that the exception occurs and determining that a currently received or to-be-sent uplink frame is an odd-numbered uplink frame, the secondary node 2 indicates, by using the to-be-sent uplink frame, for example, the uplink frame 3, that the exception occurs on the secondary node 2.

It should be noted that the uplink frame 2 and the uplink frame 3 only indicate that information carried in the uplink frames is different, the uplink frame 2 and the uplink frame 3 are both odd-numbered uplink frames, and sequence numbers of the uplink frame 2 and the uplink frame 3 are the same.

S512: The secondary node 1 sends an uplink frame 3' to the primary node, where the uplink frame 3' indicates that the exception occurs on the secondary node 2.

Because no exception occurs on the secondary node 1, the secondary node 1 may forward only the uplink frame.

Further, the primary node may determine, based on the uplink frame 3', that the exception occurs on the secondary node 2, and include information 2 used to resolve the exception of the secondary node 2 in a subsequently sent downlink frame. When receiving the downlink frame, the secondary node 2 may process the exception of the secondary node 2 based on the information 2 carried in the downlink frame.

For content that is not described in detail in S507 to S512, refer to the descriptions in S501 to S506. Details are not described herein again.

For example, structures of the uplink frame 1, the uplink frame 1', the uplink frame 1", the uplink frame 2, the uplink frame 3, and the uplink frame 3' may be any one shown in FIG. 5 to FIG. 8. The uplink frame 1 is used as an example. If a frame structure is shown in FIG. 5, an exception indication field may carry exception information indicating the exception occurs on the secondary node 3, so that the uplink frame 1 indicates that the exception occurs on the secondary node 3. If a frame structure is shown in FIG. 6, a bit corresponding to the secondary node 3 in bits carried in an exception indication bitmap field may be set to a first value, so that the uplink frame 1 indicates that the exception occurs on the secondary node 3. If a frame structure is shown in FIG. 7, an exception indication field 1 or an exception indication field 2 may carry exception information indicating the exception occurs on the secondary node 3, so that the uplink frame 1 indicates that the exception occurs on the secondary node 3. If a frame structure is shown in FIG. 8, an exception indication field 1 or a field 1 may carry exception information indicating the exception occurs on the secondary node 3, so that the uplink frame 1 indicates that the exception occurs on the secondary node 3. It should be noted that, if it is determined, by using the downlink frame, that the field 1 shown in FIG. 8 is used to carry specific uplink information, the exception information indicating the exception occurs on the secondary node 3 can be carried in only the exception indication field 1 shown in FIG. 8.

As shown in FIG. 9(b), the method 500 may further include S513 to S518. S513 to S518 may be performed before S501, or may be performed after S512. For example, in this case, the exceptions occur on the secondary node 1 with the first-type attribute and the secondary node 2 with the first-type attribute.

S513: The primary node sends an odd-numbered downlink frame to the secondary node 1.

S514: The secondary node 1 sends an odd-numbered downlink frame to the secondary node 2.

S515: The secondary node 2 sends an odd-numbered downlink frame to the secondary node 3.

S516: The secondary node 3 sends an uplink frame 4 to the secondary node 2.

For example, when receiving the odd-numbered downlink frame, the secondary node 3 may determine an odd-numbered uplink frame based on the odd-numbered downlink frame, for example, the uplink frame 4, and send the odd-numbered uplink frame.

S517: The secondary node 2 sends an uplink frame 5 to the secondary node 1, where the uplink frame 5 indicates that the exception occurs on the secondary node 2.

For example, when determining that the exception occurs and determining that a currently received or to-be-sent uplink frame is an odd-numbered uplink frame, the secondary node 2 indicates, by using the to-be-sent uplink frame, for example, the uplink frame 5, that the exception occurs on the secondary node 2.

S518: The secondary node 1 sends an uplink frame 6 to the primary node, where the uplink frame 6 indicates that the exception occurs on the secondary node 1, or indicates that the exceptions occur on the secondary node 1 and the secondary node 2.

In an example, when determining that the exception occurs and receiving the uplink frame 5, the secondary node 1 may add exception information indicating that the exception occurs on the secondary node 1 to the uplink frame 5, to obtain and send the uplink frame 6. In this case, the uplink frame 6 indicates that the exceptions occur on the secondary node 1 and the secondary node 2.

In another example, when determining that the exception occurs and receiving the uplink frame 5, the secondary node 1 determines that the uplink frame 5 does not include an idle field used to carry exception information indicating that an exception occurs on a secondary node. In addition, when reporting priorities of exceptions that are of the secondary node 2 and that are indicated in the uplink frame 5 are all lower than a reporting priority of the exception of the secondary node 1, the secondary node 2 sends, to the primary node, the uplink frame 6 indicating that the exception occurs on the secondary node 1.

The idle field may include an unoccupied exception indication field, that is, an exception indication field that does not carry any exception information. Alternatively, the idle field may include an exception indication field that carries exception information and that can still carry other exception information.

For example, reporting priorities of exceptions may be pre-determined and aligned between a plurality of secondary nodes, or the reporting priorities of the exceptions may be indicated by using exception information carried in uplink frames, so that when receiving an uplink frame that carries exception information, a secondary node on which an exception occurs can determine, based on the exception information, which of the exception indicated by the exception information and an exception that occurs on a current secondary node has a higher reporting priority.

S518': The secondary node 1 sends an uplink frame 5' to the primary node, where the uplink frame 5' indicates that the exception occurs on the secondary node 2.

For example, when determining that the exception occurs and receiving the uplink frame 5, and when determining that the uplink frame 5 does not include the idle field used to carry the exception information indicating that the exception occurs on the secondary node, the secondary node 1 may add data that the secondary node 1 needs to transmit to the primary node to the uplink frame 5, to obtain the uplink frame 5', and send the uplink frame 5' to the primary node. Alternatively, when the secondary node 1 determines that the uplink frame 5 does not include the idle field used to carry the exception information indicating that the exception occurs on the secondary node, and the reporting priorities of the exceptions indicated in the uplink frame 5 are all higher than or equal to the reporting priority of the exception of the secondary node 1, the secondary node 1 sends the uplink frame 5' to the primary node.

Either S518 or S518' may be performed.

For content that is not described in detail in S513 to S518, refer to the descriptions in S501 to S506. Details are not described herein again.

It should be noted that the uplink frame 4, the uplink frame 5, the uplink frame 5', and the uplink frame 6 are merely used to indicate that information carried in the uplink frames may be different, the uplink frame 4, the uplink frame 5, and the uplink frame 6 are all odd-numbered uplink frames, and sequence numbers of the three uplink frames are the same.

For example, structures of the uplink frame 4, the uplink frame 5, and the uplink frame 6 may be any one shown in FIG. 5 to FIG. 8. For example, the uplink frame 6 indicates that the exceptions occur on the secondary node 1 and the secondary node 2. In an example, the exception information indicating that the exception occurs on the secondary node 1 and exception information indicating that the exception occurs on the secondary node 2 may be both carried in the exception indication field shown in FIG. 5. In another example, the exception information indicating that the exception occurs on the secondary node 1 and exception information indicating that the exception occurs on the secondary node 2 may be both carried in the exception indication bitmap field shown in FIG. 6. In still another example, if the exception indication field 1 and the exception indication field 2 shown in FIG. 7 each can carry only one piece of exception information, the exception information indicating that the exception occurs on the secondary node 1 may be carried in the exception indication field 1 shown in FIG. 7, and exception information indicating that the exception occurs on the secondary node 2 may be carried in the exception indication field 2 shown in FIG. 7. Alternatively, the exception information indicating that the exception occurs on the secondary node 1 and the exception information indicating that the exception occurs on the secondary node 2 may be both carried in the exception indication field 1 shown in FIG. 7. Alternatively, the exception information indicating that the exception occurs on the secondary node 1 and the exception information indicating that the exception occurs on the secondary node 2 may be both carried in the exception indication field 2 shown in FIG. 7. In yet another example, the exception information indicating that the exception occurs on the secondary node 1 may be carried in the exception indication field 1 shown in FIG. 8, and exception information indicating that the exception occurs on the secondary node 2 may be carried in the field 1 shown in FIG. 8. Alternatively, the exception information indicating that the exception occurs on the secondary node 1 and the exception information indicating that the exception occurs on the secondary node 2 may be both carried in the exception indication field 1 shown in FIG. 8.

In some scenarios, if the uplink frame 6 indicates that the exception occurs on the secondary node 1 or the exception occurs on the secondary node 2, for a structure of the uplink frame 6, refer to the foregoing descriptions of the structure of the uplink frame 1. Details are not described herein again.

It should be noted that the secondary node with the first-type attribute shown in FIG. 9(a) and FIG. 9(b) may further include more secondary nodes, and the secondary node with the second-type attribute may also include more secondary nodes. The secondary node 1 may be a secondary node directly connected to the primary node, or one or more secondary nodes may be sequentially connected between the secondary node 1 and the primary node. The secondary node 3 may be a tail secondary node, in other words, no secondary node is connected to a downlink of the secondary node 3. Alternatively, the secondary node 3 may be an intermediate secondary node, in other words, at least one secondary node is connected to a downlink of the secondary node 3. When the secondary node 3 is the intermediate secondary node, the secondary node 3 sends a downlink frame to a secondary node on the downlink of the secondary node 3, and receives an uplink frame from the secondary node on the downlink of the secondary node 3. In addition, one or more secondary nodes may be sequentially connected between the secondary node 1 and the secondary node 2, and one or more secondary nodes may also be sequentially connected between the secondary node 2 and the secondary node 3.

In a specific implementation process, the secondary node 1 may be the secondary node directly connected to the primary node, or the one or more secondary nodes may be sequentially connected between the secondary node 1 and the primary node. The secondary node 3 may be the tail secondary node, in other words, no secondary node is connected to the downlink of the secondary node 3. Alternatively, the secondary node 3 may be the intermediate secondary node, in other words, the at least one secondary node is connected to the downlink of the secondary node 3. When the secondary node 3 is the intermediate secondary node, the secondary node 3 sends a secondary node discovery frame 2 to the secondary node on the downlink of the secondary node 3. In addition, the one or more secondary nodes may be sequentially connected between the secondary node 1 and the secondary node 2, and the one or more secondary nodes may also be sequentially connected between the secondary node 2 and the secondary node 3.

When the method 400 and the method 500 are combined, the secondary node 1, the secondary node 2, and the secondary node 3 in the method 500 may be considered as some examples of the first secondary node. When the secondary node 1 is the first secondary node, the uplink frame 5' and the uplink frame 6 may be considered as some examples of the first uplink frame. When the secondary node 2 is the first secondary node, the uplink frame 3 and the uplink frame 5 may be considered as some examples of the first uplink frame. When the secondary node 3 is the first secondary node, the uplink frame 1 may be considered as an example of the first uplink frame.

For example, the secondary node 1 is the first secondary node, the exception that occurs on the secondary node 1 is the first exception, and the uplink frame 6 indicating that the exception occurs on the secondary node 1 or indicating that the exceptions occur on the secondary node 1 and the secondary node 2 is the first uplink frame. S517 and S518 may be summarized as any one of the following (1) to (3):
(1) Before sending the first uplink frame, the first secondary node receives a second uplink frame that carries second exception information, where the second exception information indicates that a second exception occurs on a second secondary node; and when a reporting priority of the first exception is higher than a reporting priority of the second exception, sends the first uplink frame in a first time period.

For example, the second uplink frame includes a first exception indication field, and the first exception indication field can carry only one piece of exception information indicating that an exception occurs on one secondary node. In this case, the first uplink frame is obtained by overwriting the second exception information in the second uplink frame with the first exception information, and the first uplink frame is sent.

The secondary node 2 may be considered as an example of the second secondary node, the uplink frame 5 may be considered as an example of the second uplink frame, and the second exception may be an exception that occurs on the secondary node 2.

(2) Before sending the first uplink frame, the first secondary node receives a third uplink frame that includes a second exception indication field and a third exception indication field; and when the second exception indication field is not occupied and the third exception indication field carries third exception information indicating that a third exception occurs on a third secondary node, sends the first uplink frame in the first time period. The first uplink frame carries the first exception information by using the second exception indication field, and the first uplink frame further includes the third exception indication field that carries the third exception information.

The secondary node 2 may be considered as an example of the third secondary node. The uplink frame 5 may be considered as an example of the third uplink frame. The third exception may be an exception that occurs on the secondary node 2. The second exception indication field and the third exception indication field may be the exception indication field 1 and the exception indication field 2 shown in FIG. 7, respectively.

(3) Before sending the first uplink frame, the first secondary node receives a fourth uplink frame including a fourth exception indication field, where the fourth exception indication field carries fourth exception information, and the fourth exception information indicates that a fourth exception occurs on a fourth secondary node; and sends, in the first time period by using the fourth exception indication field, the first uplink frame that carries the first exception information and the fourth exception information.

The secondary node 2 may be considered as an example of the fourth secondary node. The uplink frame 5 may be considered as an example of the fourth uplink frame. The fourth exception may be an exception that occurs on the secondary node 2. The fourth exception indication field may be the exception indication bitmap field shown in FIG. 6. When the exception indication field 1 shown in FIG. 7 or FIG. 8 may carry a plurality of pieces of exception information, the fourth exception indication field may alternatively be the exception indication field 1 shown in FIG. 7 or FIG. 8.

For example, the secondary node 1 is the first secondary node, and the uplink frame 5' is the first uplink frame. S517 and S518' may be summarized as either (a) or (b):
(a) The first secondary node receives a fifth uplink frame that carries fifth exception information, where the fifth exception information indicates that a fifth exception occurs on a fifth secondary node; and when the fifth uplink frame does not include an idle field used to carry the first exception information, the first secondary node sends a sixth uplink frame, where the sixth uplink frame carries the fifth exception information. The secondary node 2 may be considered as an example of the fifth secondary node. The uplink frame 5 may be considered as an example of the fifth uplink frame. The uplink frame 5' may be considered as an example of the sixth uplink frame. The fifth exception may be an exception that occurs on the secondary node 2.

In an implementation, the fifth uplink frame includes at least one exception indication field and a second field, the at least one exception indication field carries the fifth exception information, the second field carries sixth exception information, and the sixth exception information indicates that a sixth exception occurs on a sixth secondary node; or the second field is used to carry uplink information of a specific secondary node. In other words, when the fifth uplink frame does not include the idle field used to carry the first exception information, the first secondary node directly forwards the fifth uplink frame. The field 1 shown in FIG. 8 may be considered as an example of the second field. The exception indication field 1 shown in FIG. 8 may be considered as an example of the at least one exception indication field. The secondary node 2 may be considered as an example of the sixth secondary node. The sixth exception may be an exception that occurs on the secondary node 2.

(b) The first secondary node determines that a seventh exception occurs; receives a seventh uplink frame, where the seventh uplink frame indicates that an eighth exception occurs on the sixth secondary node; and when a reporting priority of the seventh exception is lower than or equal to a reporting priority of the eighth exception, and the seventh uplink frame does not include an idle field used to carry information indicating the seventh exception, sends an eighth uplink frame in a third time period, where the eighth uplink frame indicates the eighth exception, and the third time period is associated with the first secondary node.

The seventh exception may be an exception that occurs on the secondary node 1. The secondary node 2 may be considered as an example of the sixth secondary node. The uplink frame 5 may be considered as an example of the seventh uplink frame. The uplink frame 5' may be considered as an example of the eighth uplink frame. The eighth exception may be an exception that occurs on the secondary node 2. The third time period is included in a cycle in which the secondary node with the first-type attribute reports an exception. For example, the third time period may be a time period from a moment at which the secondary node 1 receives the uplink frame 5 to a moment at which the secondary node 1 sends the uplink frame 5'.

For example, the secondary node 2 is the first secondary node, and the exception that occurs on the secondary node 2 is the first exception. S504 and S505 may be summarized as follows: The first secondary node receives the fifth uplink frame, where the fifth uplink frame includes at least two exception indication fields, one of the at least two exception indication fields carries the fifth exception information, and at least one of remaining fields of the at least two exception indication fields is not occupied; and sends the sixth uplink frame when the fifth secondary node and the first secondary node belong to different secondary node groups.

That the fifth secondary node and the first secondary node belong to different secondary node groups may also be understood as follows: Attributes of the fifth secondary node and the first secondary node are different.

The secondary node 3 may be considered as an example of the fifth secondary node. The uplink frame 1 may be considered as an example of the fifth uplink frame. The uplink frame 1' may be considered as an example of the sixth uplink frame. The fifth exception may be an exception that occurs on the secondary node 3. The at least two exception indication fields may include the exception indication field 1 and the exception indication field 2 shown in FIG. 7.

In some possible implementations, secondary nodes may not be divided based on attributes of the secondary nodes, or the secondary nodes may not be grouped. When determining that an exception occurs on the secondary node, the secondary node may determine, based on a frame structure of an uplink frame and/or information carried in a received uplink frame, whether to report the exception.

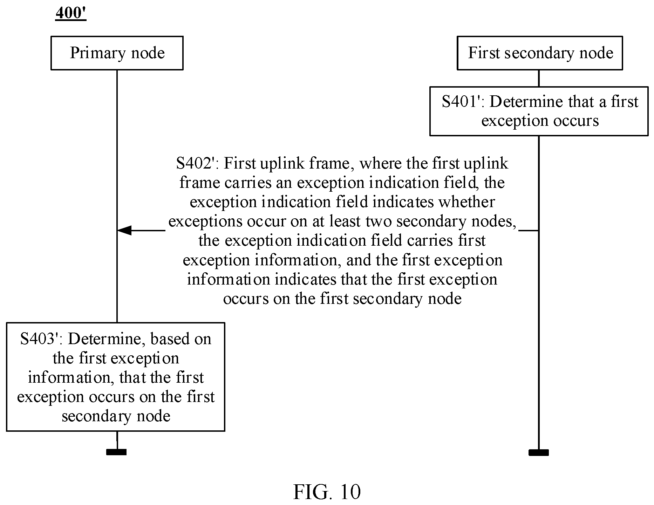

FIG. 10 is a schematic flowchart of a communication method according to an embodiment of this application. The method 400' may be performed by the audio system 100 shown in FIG. 1, or may be applied to the audio system shown in FIG. 2. For example, a primary node may be the primary node 112 in FIG. 1, and a first secondary node may be any one of the secondary node 120 to the secondary node 140 in FIG. 1. The first secondary node may be a secondary node connected to the primary node, or one or more secondary nodes may be connected between the first secondary node and the primary node. The method 400' includes the following steps.

S401': The first secondary node determines that a first exception occurs.

For example, the first exception may include the first exception described in the method 400.

S402': The first secondary node sends a first uplink frame, where the first uplink frame carries an exception indication field, the exception indication field indicates whether exceptions occur on at least two secondary nodes, the exception indication field carries first exception information, and the first exception information indicates that the first exception occurs.

For example, for a manner in which the first uplink frame carries the exception indication field and a manner in which the first exception information is carried by using the exception indication field, refer to the descriptions of the corresponding parts in FIG. 5 to FIG. 8. Details are not described herein again.

In some possible implementations, the method further includes: receiving an uplink frame, and generating the first uplink frame based on information carried in the uplink frame. For example, when an exception occurs on one or more secondary nodes located on a downlink of the first secondary node, and the uplink frame received by the first secondary node carries exception information indicating that the exception occurs on the one or more secondary nodes, the first secondary node may determine, based on the received uplink frame, to send the first uplink frame or forward the uplink frame received by the first secondary node.

S403': The primary node receives the first uplink frame, and determines, based on the first exception information, that the first exception occurs.

According to the communication method provided in this embodiment of this application, secondary nodes with different attributes can report exceptions in one uplink frame. This can increase an opportunity of reporting the exception by the secondary node, and improve efficiency of reporting the exception by the secondary node.

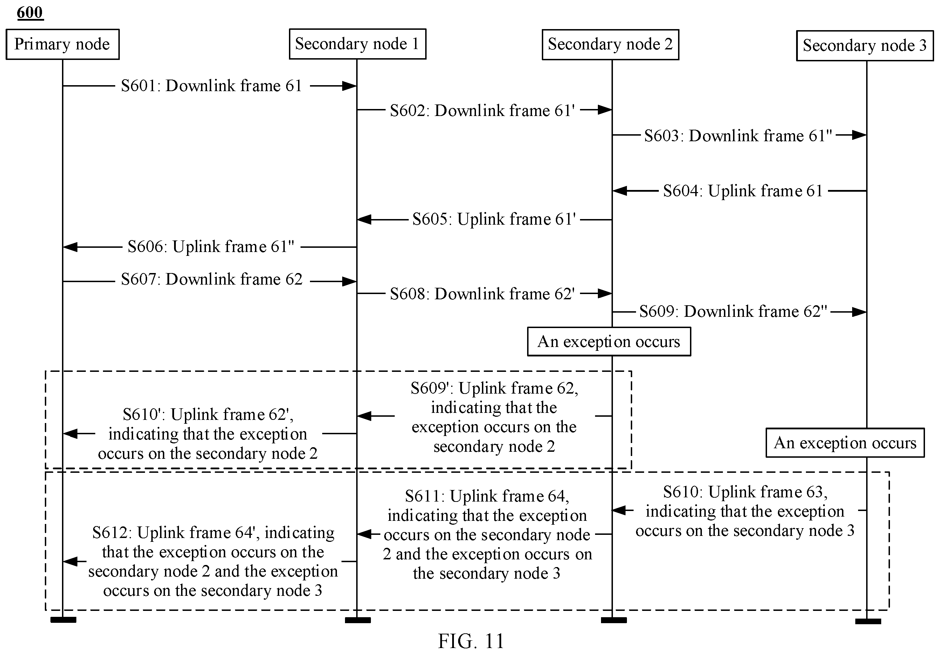

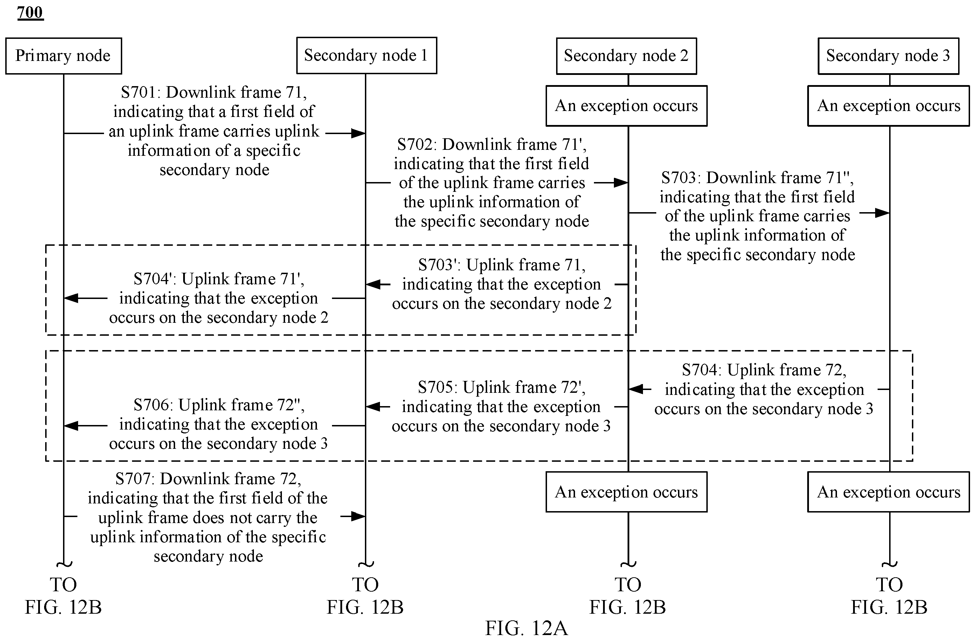

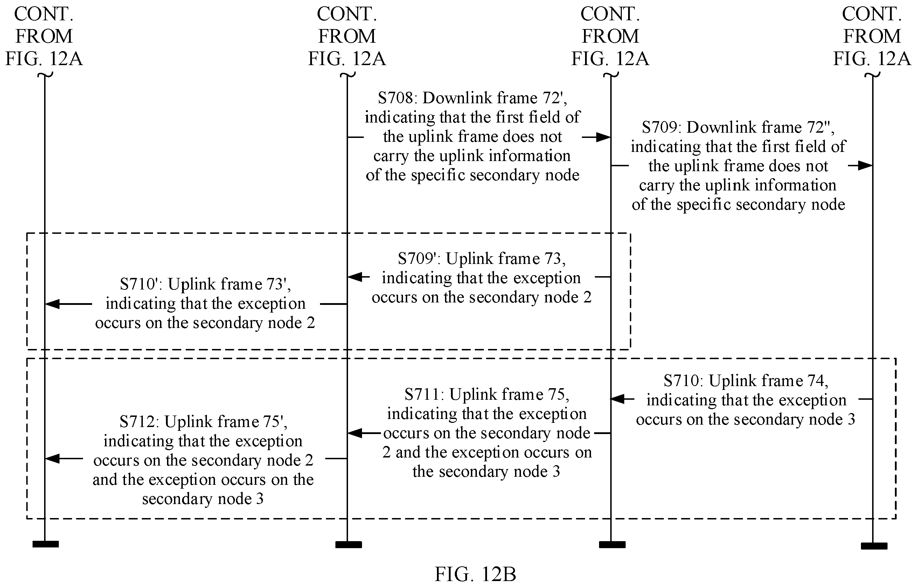

To help understand the method 400', the following describes application scenarios of the method 400' with reference to FIG. 11 and FIG. 12A and FIG. 12B.

FIG. 11 is a schematic flowchart of a communication method according to an embodiment of this application. The method 600 may be performed by the audio system 100 shown in FIG. 1, or may be applied to the audio system shown in FIG. 2. For example, a primary node may be the primary node 112 in FIG. 1, and a secondary node 1 to a secondary node 3 may be the secondary node 120 to the secondary node 140 in FIG. 1, respectively. Specifically, the method 600 may include S601 to S612.

S601: The primary node sends a downlink frame 61 to the secondary node 1.

S602: The secondary node 1 sends a downlink frame 61' to the secondary node 2.

S603: The secondary node 2 sends a downlink frame 61" to the secondary node 3.

S604: The secondary node 3 sends an uplink frame 61 to the secondary node 2.

S605: The secondary node 2 sends an uplink frame 61' to the secondary node 1.

S606: The secondary node 1 sends an uplink frame 61" to the primary node.

When no exception occurs on the secondary node 1, the secondary node 2, and the secondary node 3, S601 to S606 may be performed. When exceptions occur on the secondary node 2 and the secondary node 3, the following S606 to S612 may be performed.

S607: The primary node sends a downlink frame 62 to the secondary node 1.

S608: The secondary node 1 sends a downlink frame 62' to the secondary node 2.

S609: The secondary node 2 sends a downlink frame 62" to the secondary node 3.

S610: The secondary node 3 sends an uplink frame 63 to the secondary node 2, where the uplink frame 63 indicates that an exception occurs on the secondary node 3.

S611: The secondary node 2 sends an uplink frame 64 to the secondary node 1, where the uplink frame 64 indicates that an exception occurs on the secondary node 2 and the exception occurs on the secondary node 3.

For example, for a specific implementation in which the secondary node 2 sends the uplink frame 64, refer to the related descriptions in S518. Details are not described herein again.

It should be noted that the uplink frame 63 and the uplink frame 64 are merely used to indicate that information carried in the uplink frames may be different, and sequence numbers of the uplink frames are the same.

S612: The secondary node 1 sends an uplink frame 64' to the primary node, where the uplink frame 64' indicates that the exception occurs on the secondary node 2 and the exception occurs on the secondary node 3.

For example, the secondary node 2 may be considered as an example of the first secondary node in the method 400', and the uplink frame 64 may be considered as an example of the first uplink frame in the method 400'.

Optionally, when the exception occurs on the secondary node 2, after S608 is performed, S609' and S610' may be further performed.

S609': The secondary node 2 sends an uplink frame 62 to the secondary node 1, where the uplink frame 62 indicates that the exception occurs on the secondary node 2.

S610': The secondary node 1 sends an uplink frame 62' to the primary node, where the uplink frame 62' indicates that the exception occurs on the secondary node 2.

In other words, in some implementations, when determining that an exception occurs, an intermediate secondary node may send an uplink frame to report the exception.

FIG. 12A and FIG. 12B are a schematic flowchart of a communication method according to an embodiment of this application. The method 700 may be performed by the audio system 100 shown in FIG. 1, or may be applied to the audio system shown in FIG. 2. For example, a primary node may be the primary node 112 in FIG. 1, and a secondary node 1 to a secondary node 3 may be the secondary node 120 to the secondary node 140 in FIG. 1, respectively. The method 700 is described by using an example in which a structure of an uplink frame is shown in FIG. 8. Specifically, the method 700 may include S701 to S712.

S701: The primary node sends a downlink frame 71 to the secondary node 1, where the downlink frame 71 indicates that a first field of an uplink frame carries uplink information of a specific secondary node.

For example, the field 1 shown in FIG. 8 is an example of the first field.

S702: The secondary node 1 sends a downlink frame 71' to the secondary node 2, where the downlink frame 71' indicates that the first field of the uplink frame carries the uplink information of the specific secondary node.

S703: The secondary node 2 sends a downlink frame 71" to the secondary node 3, where the downlink frame 71" indicates that the first field of the uplink frame carries the uplink information of the specific secondary node.

S704: The secondary node 3 sends an uplink frame 72 to the secondary node 2, where the uplink frame 72 indicates that an exception occurs on the secondary node 3.

For example, if the secondary node 3 determines that the exception occurs, the secondary node 3 sends the uplink frame 72 to indicate that the exception occurs on the secondary node 3.

S705: The secondary node 2 sends an uplink frame 72' to the secondary node 1, where the uplink frame 72' indicates that the exception occurs on the secondary node 3.

For example, the uplink frame 72 includes only one exception indication field, and the exception indication field can carry only one piece of exception indication information. In some implementations, because the first field is indicated to be used to carry the uplink information of the specific secondary node, even if the secondary node 2 determines that an exception occurs, the secondary node 2 cannot add, to the uplink frame 72, exception information indicating that the exception occurs on the secondary node 2. Therefore, the secondary node 2 forwards the uplink frame 72.

S706: The secondary node 1 sends an uplink frame 72" to the primary node, where the uplink frame 72" indicates that the exception occurs on the secondary node 3.

Optionally, when the exception occurs on the secondary node 2, after S702 is performed, S703' and S704' may be further performed.

S703': The secondary node 2 sends an uplink frame 71 to the secondary node 1, where the uplink frame 71 indicates that the exception occurs on the secondary node 2.

S704': The secondary node 1 sends an uplink frame 71' to the primary node, where the uplink frame 71' indicates that the exception occurs on the secondary node 2.

For example, for a manner in which the uplink frame 71 and the uplink frame 72 indicate that the exceptions occur on the secondary nodes, refer to the foregoing descriptions related to the frame structure of the uplink frame 1. Details are not described herein again.

S707: The primary node sends a downlink frame 72 to the secondary node 1, where the downlink frame 72 indicates that the first field of the uplink frame does not carry the uplink information of the specific secondary node.

When the downlink frame 72 indicates that the first field of the uplink frame does not carry the uplink information of the specific secondary node, the first field may be used to carry information indicating that an exception occurs on a secondary node.

S708: The secondary node 1 sends a downlink frame 72' to the secondary node 2, where the downlink frame 72' indicates that the first field of the uplink frame does not carry the uplink information of the specific secondary node.

S709: The secondary node 2 sends a downlink frame 72" to the secondary node 3, where the downlink frame 72" indicates that the first field of the uplink frame does not carry the uplink information of the specific secondary node.

S710: The secondary node 3 sends an uplink frame 74 to the secondary node 2, where the uplink frame 74 indicates that the exception occurs on the secondary node 3.

For example, if the secondary node 3 determines that the exception occurs, the secondary node 3 sends the uplink frame 74 to indicate that the exception occurs on the secondary node 3.

S711: The secondary node 2 sends an uplink frame 75 to the secondary node 1, where the uplink frame 75 indicates that the exception occurs on the secondary node 1 and the exception occurs on the secondary node 3.

For example, the uplink frame 74 includes only one exception indication field, the exception indication field can carry only one piece of exception indication information, and in this case, the exception indication field in the uplink frame 74 already carries information indicating that the exception occurs on the secondary node 3. In this case, when determining that the exception occurs, the secondary node 2 may add, to a first field of the uplink frame 74, the information indicating that the exception occurs on the secondary node 2, to generate the uplink frame 75 and send the uplink frame 75.

S712: The secondary node 1 sends an uplink frame 75' to the primary node, where the uplink frame 75' indicates that the exception occurs on the secondary node 1 and the exception occurs on the secondary node 3.

Optionally, when the exception occurs on the secondary node 2, after S708 is performed, S709' and S710' may be further performed.

S709': The secondary node 2 sends an uplink frame 73 to the secondary node 1, where the uplink frame 73 indicates that the exception occurs on the secondary node 2.

S704': The secondary node 1 sends an uplink frame 73' to the primary node, where the uplink frame 73' indicates that the exception occurs on the secondary node 2.

For example, for a manner in which the uplink frame 73 and the uplink frame 74 indicate that the exceptions occur on the secondary nodes, refer to the foregoing descriptions related to the frame structure of the uplink frame 1. For a manner in which the uplink frame 75 indicates that the exceptions occur on the secondary nodes, refer to the foregoing descriptions related to the frame structure of the uplink frame 6. Details are not described herein again.

It should be noted that a sequence of performing S701 to S706 and S707 to S712 is not limited in this application. For example, S707 to S712 may be performed before S701 to S706.

It should be further noted that, in this embodiment of this application, a limitation that the exception indication field can carry only exception information indicating that an exception occurs on one secondary node is intended to ensure clear description of the solution. In an actual implementation, the exception indication field in this embodiment of this application is not limited to carrying only the exception information indicating that the exception occurs on the one secondary node. In addition, for an implementation in which the exception indication field may carry exception information indicating that exceptions occur on a plurality of secondary nodes, refer to the descriptions in the foregoing embodiments. For example, refer to some descriptions of the frame structure of the uplink frame 6. Details are not described herein again.

For a specific implementation in which the first secondary node sends the first uplink frame or forwards the uplink frame or downlink frame received by the first secondary node based on the received uplink frame in the method 600 and the method 700, refer to the related descriptions of S517, S518, and S518'. Details are not described herein again.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

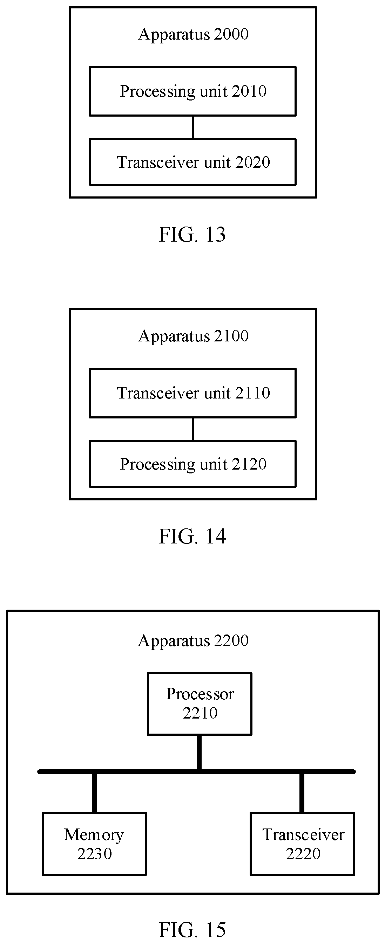

The foregoing describes in detail the communication methods provided in embodiments of this application with reference to FIG. 1 to FIG. 12B. The following describes in detail communication apparatuses provided in embodiments of this application with reference to FIG. 13 to FIG. 15. It should be understood that descriptions of control apparatus embodiments correspond to the descriptions of the method embodiments. Therefore, for content that is not described in detail, refer to the foregoing method embodiments. For brevity, details are not described herein again.

FIG. 13 is a block diagram of a communication apparatus 2000 according to an embodiment of this application. The apparatus 2000 may include units configured to perform operations performed by the secondary node in the method 400, the method 400', the method 500, the method 600, and the method 700. In addition, the units in the apparatus 2000 are respectively used to implement corresponding procedures in the foregoing method embodiments.

Specifically, the apparatus 2000 includes a processing unit 2010 and a transceiver unit 2020.

When the apparatus 2000 is applied to the method 400, the processing unit 2010 is configured to determine that a first exception occurs, and the transceiver unit 2020 is configured to send a first uplink frame in a first time period, where the first uplink frame carries first exception information, the first exception information indicates that the first exception occurs, and the first time period is associated with a first secondary node.

In some possible implementations, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

In some possible implementations, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

In some possible implementations, before the transceiver unit 2020 sends the first uplink frame in the first time period, the transceiver unit 2020 is further configured to: receive a second uplink frame that carries second exception information, where the second exception information indicates that a second exception occurs on a second secondary node; and when a reporting priority of the first exception is higher than a reporting priority of the second exception, send the first uplink frame in the first time period.

In some possible implementations, the second secondary node and the first secondary node belong to a same secondary node group.

In some possible implementations, the first exception information further indicates the reporting priority of the first exception and/or a type of the first exception.

In some possible implementations, the first uplink frame includes a first exception indication field, and the first exception indication field carries the first exception information.

In some possible implementations, before the transceiver unit 2020 sends the first uplink frame in the first time period, the transceiver unit 2020 is further configured to: receive a third uplink frame, where the third uplink frame includes a second exception indication field and a third exception indication field; and when the second exception indication field is not occupied and the third exception indication field carries third exception information indicating that a third exception occurs on a third secondary node, send the first uplink frame in the first time period, where the third exception indication field of the first uplink frame carries the third exception information.

In some possible implementations, the third secondary node and the first secondary node belong to a same secondary node group, or the third secondary node and the first secondary node belong to different node groups.

In some possible implementations, when the third exception indication field is not occupied, a value of the third exception indication field is a specific value; or when the third exception indication field carries the first exception information, the value of the third exception indication field is a non-specific value.

In some possible implementations, the transceiver unit 2020 is configured to receive a first downlink frame, where the first downlink frame includes an indication bit; and the indication bit indicates that a first field in an uplink frame is used to carry information about an exception of a secondary node, or indicates that the first field is used to carry uplink information of a specific secondary node.

For example, the downlink frame 71 and the downlink frame 72 in the method 700 may be considered as some examples of the first downlink frame.

In some possible implementations, a fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

In some possible implementations, before the transceiver unit 2020 sends the first uplink frame in the first time period, the transceiver unit 2020 is further configured to: receive a fourth uplink frame, where the fourth uplink frame includes the fourth exception indication field, the fourth exception indication field carries fourth exception information, and the fourth exception information indicates that a fourth exception occurs on a fourth secondary node; and send, in the first time period by using the fourth exception indication field, the first uplink frame that carries the first exception information and the fourth exception information.

In some possible implementations, the fourth secondary node and the first secondary node belong to a same secondary node group.

In some possible implementations, the transceiver unit 2020 is further configured to: receive a fifth uplink frame, where the fifth uplink frame carries fifth exception information, and the fifth exception information indicates that a fifth exception occurs on a fifth secondary node; and when the fifth uplink frame does not include an idle field used to carry the first exception information, send a sixth uplink frame, where the sixth uplink frame carries the fifth exception information.

In some possible implementations, the fifth uplink frame and the sixth uplink frame include at least one exception indication field and a second field, the at least one exception indication field carries the fifth exception information, the second field carries sixth exception information, and the sixth exception information indicates that a sixth exception occurs on a sixth secondary node; or the second field is used to carry uplink information of a specific secondary node.

In some possible implementations, the fifth uplink frame and the sixth uplink frame include at least two exception indication fields, one of the at least two exception indication fields carries the fifth exception information, at least one of remaining fields of the at least two exception indication fields is not occupied, and the transceiver unit 2020 is further configured to send the sixth uplink frame when the fifth secondary node and the first secondary node belong to different secondary node groups.

In some possible implementations, the transceiver unit 2020 is further configured to send the sixth uplink frame in a second time period, where the second time period is associated with the fifth secondary node.

In some possible implementations, the processing unit 2010 is further configured to determine that a seventh exception occurs on the first secondary node. The transceiver unit 2020 is further configured to: receive a seventh uplink frame, where the seventh uplink frame indicates that an eighth exception occurs on the sixth secondary node; and when a reporting priority of the seventh exception is lower than or equal to a reporting priority of the eighth exception, and the seventh uplink frame does not include an idle field used to carry information indicating the seventh exception, send an eighth uplink frame in a third time period, where the eighth uplink frame indicates the eighth exception, and the third time period is associated with the first secondary node.

In some possible implementations, the first exception includes at least one of the following: an exception of information transmission of the first secondary node, an exception of a parameter of the first secondary node, and an exception of a peripheral device associated with the first secondary node.

When the apparatus 2000 is applied to the method 400', the processing unit 2010 is configured to determine that a first exception occurs; and the transceiver unit 2020 is configured to send a first uplink frame, the first uplink frame carries an exception indication field, the exception indication field indicates whether exceptions occur on at least two secondary nodes, the exception indication field carries first exception information, and the first exception information indicates that the first exception occurs.

In some possible implementations, before the transceiver unit 2020 sends the first uplink frame, the transceiver unit 2020 is further configured to receive a third uplink frame, where the third uplink frame includes a second exception indication field and a third exception indication field; and when the second exception indication field carries second exception information indicating that a second exception occurs on a second secondary node, the third exception indication field carries third exception information indicating that a third exception occurs on a third secondary node, and a reporting priority of the first exception is higher than a reporting priority of the second exception, send the first uplink frame; or when the second exception indication field is not occupied and the third exception indication field carries the third exception information, send the first uplink frame, where the third exception indication field of the first uplink frame carries the third exception information.

In some possible implementations, when the second exception indication field is not occupied, a value of the second exception indication field is a specific value; or when the second exception indication field carries the first exception information or the second exception information, the value of the second exception indication field is a non-specific value.

In some possible implementations, the first exception information further indicates the reporting priority of the first exception and/or a type of the first exception.

In some possible implementations, the transceiver unit 2020 is further configured to receive a first downlink frame, where the first downlink frame includes an indication bit; and the indication bit indicates that a first field in an uplink frame is used to carry information about an exception of a secondary node, or indicates that the first field is used to carry uplink information of a specific secondary node.

In some possible implementations, a fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

In some possible implementations, before the transceiver unit 2020 sends the first uplink frame, the transceiver unit 2020 is further configured to: receive a fourth uplink frame, where the fourth uplink frame includes the fourth exception indication field, the fourth exception indication field carries fourth exception information, and the fourth exception information indicates that a fourth exception occurs on a fourth secondary node; and send, by using the fourth exception indication field, the first uplink frame that carries the first exception information and the fourth exception information.

In some possible implementations, the transceiver unit 2020 is further configured to send the first uplink frame in a first time period, where the first time period is associated with a first secondary node.

In some possible implementations, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

In some possible implementations, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

In some possible implementations, the transceiver unit 2020 is further configured to: receive a fifth uplink frame, where all exception indication fields that are in the fifth uplink frame and that indicate that exceptions occur on secondary nodes have been occupied; and when the fifth uplink frame does not include an idle field used to carry the first exception information, send a sixth uplink frame, where the sixth uplink frame carries fifth exception information.

In some possible implementations, reporting priorities of the exceptions indicated in the fifth uplink frame are all higher than or equal to the reporting priority of the first exception.

In some possible implementations, the first exception includes at least one of the following: an exception of information transmission of the first secondary node, an exception of a parameter of the first secondary node, and an exception of a peripheral device associated with the first secondary node.

FIG. 14 is a block diagram of a communication apparatus 2100 according to an embodiment of this application. The apparatus 2100 may include units configured to perform operations performed by the primary node in the method 400, the method 400', the method 500, the method 600, and the method 700. In addition, the units in the apparatus 2100 are respectively used to implement corresponding procedures in the foregoing method embodiments.

Specifically, the apparatus 2100 includes a transceiver unit 2110 and a processing unit 2120.

When the apparatus 2100 is applied to the method 400, the transceiver unit 2110 is configured to receive a first uplink frame in a first time period, where the first uplink frame carries first exception information, the first exception information indicates that a first exception occurs, and the first time period is associated with a first secondary node; and the processing unit 2120 is configured to determine, based on the first exception information, that the first exception occurs.

In some possible implementations, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

In some possible implementations, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

In some possible implementations, the transceiver unit 2110 is configured to: when a second exception occurs on a second secondary node, and a reporting priority of the second exception is lower than a reporting priority of the first exception, receive the first uplink frame in the first time period, where the first secondary node and the second secondary node belong to a same secondary node group.

In some possible implementations, the first exception information further indicates the reporting priority of the first exception and/or a type of the first exception.

In some possible implementations, the first uplink frame includes a first exception indication field, and the first exception indication field carries the first exception information.

In some possible implementations, the first uplink frame includes a second exception indication field and a third exception indication field, the second exception indication field carries the first exception information, and the third exception indication field carries third exception information indicating that a third exception occurs on a third secondary node, or the third exception indication field is not occupied.

In some possible implementations, the third secondary node and the first secondary node belong to a same secondary node group, or the third secondary node and the first secondary node belong to different node groups.

In some possible implementations, when the third exception indication field is not occupied, a value of the third exception indication field is a specific value; or when the third exception indication field carries the third exception information, the value of the third exception indication field is a non-specific value.

In some possible implementations, the transceiver unit 2110 is further configured to send a first downlink frame, where the first downlink frame includes an indication bit; and the indication bit indicates that a first field in an uplink frame is used to carry information about an exception of a secondary node, or indicates that the first field is used to carry uplink information of a specific secondary node.

In some possible implementations, the first uplink frame includes a fourth exception indication field, the fourth exception indication field carries the first exception information, and the fourth exception indication field is further used to carry information about an exception of another secondary node.

In some possible implementations, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

In some possible implementations, the transceiver unit 2110 is further configured to receive a sixth uplink frame in a second time period, where the sixth uplink frame carries fifth exception information, the fifth exception information indicates that a fifth exception occurs on a fifth secondary node, the second time period is associated with the fifth secondary node, and the fifth secondary node and the first secondary node belong to different secondary node groups.

In some possible implementations, the first exception includes at least one of the following: an exception of information transmission of the first secondary node, an exception of a parameter of the first secondary node, and an exception of a peripheral device associated with the first secondary node.

When the apparatus 2100 is applied to the method 400', the transceiver unit 2110 is configured to receive a first uplink frame, where the first uplink frame carries an exception indication field, the exception indication field indicates whether exceptions occur on at least two secondary nodes, the exception indication field carries first exception information, and the first exception information indicates that a first exception occurs; and the processing unit 2120 is configured to determine, based on the first exception information, that the first exception occurs.

In some possible implementations, the first uplink frame includes a second exception indication field and a third exception indication field, the second exception indication field carries the first exception information, and the third exception indication field carries third exception information indicating that a third exception occurs on a third secondary node, or the third exception indication field is not occupied.

In some possible implementations, when the third exception indication field is not occupied, a value of the third exception indication field is a specific value; or when the third exception indication field carries the third exception information, the value of the third exception indication field is a non-specific value.

In some possible implementations, the first exception information further indicates a reporting priority of the first exception and/or a type of the first exception.

In some possible implementations, the transceiver unit 2110 is further configured to send a first downlink frame, where the first downlink frame includes an indication bit; and the indication bit indicates that a first field in an uplink frame is used to carry information about an exception of a secondary node, or indicates that the first field is used to carry uplink information of a specific secondary node.

In some possible implementations, the first uplink frame includes a fourth exception indication field, the fourth exception indication field carries the first exception information, and the fourth exception indication field is further used to carry information about an exception of another secondary node.

In some possible implementations, the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

In some possible implementations, the transceiver unit 2110 is further configured to receive the first uplink frame in a first time period, where the first time period is associated with a first secondary node.

In some possible implementations, that the first time period is associated with the first secondary node includes: The first time period is determined based on an attribute of the first secondary node, and the attribute includes at least one of the following: an identifier of the first secondary node, a service type of the first secondary node, and a topological location of the first secondary node.

In some possible implementations, that the first time period is associated with the first secondary node includes: the first time period is included in an exception reporting cycle of a first secondary node group, the first secondary node group includes the first secondary node, and an exception is reported in the exception reporting cycle when the exception occurs on at least one secondary node in the first secondary node group.

For example, the apparatus 2000 may be disposed in any one of the secondary node 122, the secondary node 132, and the secondary node 142 shown in FIG. 1. Alternatively, the apparatus 2000 may be disposed in any one of the audio devices 120 to 140 shown in FIG. 3. Operations performed by the processing unit 2010 and the transceiver unit 2020 may be performed by one processor, or may be performed by different processors. In a specific implementation process, the one or more processors may be disposed in the audio device; or the apparatus 2000 may be a chip disposed in the audio device.

For example, the apparatus 2100 may be disposed in the primary node 112 shown in FIG. 1. Alternatively, the apparatus 2100 may be disposed in the audio device control device 110 shown in FIG. 3. Operations performed by the transceiver unit 2110 and the processing unit 2120 may be performed by one processor, or may be performed by different processors. In a specific implementation process, the one or more processors may be disposed in the audio control device; or the apparatus 2100 may be a chip disposed in the audio control device.

In this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

In a specific implementation process, all or some of the units in the foregoing apparatus may be integrated together, or may be implemented independently. In an implementation, these units are integrated together and implemented in a form of a system-on-a-chip (system-on-a-chip, SoC).

FIG. 15 is a block diagram of a communication apparatus according to an embodiment of this application. The communication apparatus 2200 shown in FIG. 15 may include a processor 2210, a transceiver 2220, and a memory 2230. The processor 2210, the transceiver 2220, and the memory 2230 are connected through an internal connection path. The memory 2230 is configured to store instructions. The processor 2210 is configured to execute the instructions stored in the memory 2230, to implement the methods in the foregoing embodiments. Optionally, the memory 2230 may be coupled to the processor 2210 through an interface, or may be integrated with the processor 2210.

It should be noted that the transceiver 2220 may include but is not limited to a transceiver apparatus like an input/output interface (input/output interface), to implement communication between the apparatus 2200 and another device or a communication network.

The memory 2230 may be a read-only memory (read-only memory, ROM), a static storage device, a dynamic storage device, or a random access memory (random access memory, RAM).

The transceiver 2220 uses a transceiver apparatus, for example, but not limited to, a transceiver, to implement communication between the apparatus 2200 and another device or a communication network, to receive/send data/information used to implement the methods in the foregoing embodiments.

An embodiment of this application further provides a communication system. The communication system includes the apparatus 2000 and the apparatus 2100, or the communication system includes the apparatus 2200.

An embodiment of this application further provides a vehicle. The vehicle includes the apparatus 2000 and the apparatus 2100, or the vehicle includes the apparatus 2200, or the vehicle further includes the communication system.

The vehicle in this application may include a road transportation means, a water transportation means, an air transportation means, an industrial device, an agricultural device, an entertainment device, or the like. The vehicle may be a vehicle in a broad sense, and may be a means of transportation (for example, a commercial vehicle, a passenger vehicle, a motorcycle, an airborne vehicle, or a train), an industrial vehicle (for example, a forklift, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application.

An embodiment of this application further provides a computer program product. The computer program product includes computer program code. When the computer program code is run on a computer, the computer is enabled to implement the methods in embodiments of this application.

An embodiment of this application further provides a computer-readable storage medium. The computer-readable medium stores computer instructions. When the computer instructions are run on a computer, the computer is enabled to implement the methods in embodiments of this application.

An embodiment of this application further provides a chip, including a circuit, configured to perform the methods in embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, a sequence, priorities, quantities, content, or the like of the described objects. In embodiments of this application, use of a prefix word, for example, an ordinal number, for distinguishing between the described objects does not constitute a limitation on the described objects. For descriptions of the described objects, refer to the descriptions in the context in the claims or embodiments. Use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The units described as separate parts may or may not be physically separate, and parts displayed as units may or may not be physical units, may be located in one position, or may be distributed on a plurality of network units. The part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first secondary node, wherein the method comprises:
determining that a first exception occurs, wherein the first exception is associated with the first secondary node; and
sending a first uplink frame in a first time period, wherein the first uplink frame carries first exception information, the first exception information indicates that the first exception occurs, and the first time period is associated with the first secondary node.

2. The method according to claim 1, wherein that the first time period is associated with the first secondary node comprises: the first time period is determined based on an attribute of the first secondary node, and the attribute comprises at least one of the following: an identifier of the first secondary node, a service type of the first secondary node, and a topological location of the first secondary node.

3. The method according to claim 1 or 2, wherein that the first time period is associated with the first secondary node comprises: the first time period is comprised in an exception reporting cycle of a first secondary node group, the first secondary node group comprises the first secondary node, and an exception is reported in the exception reporting cycle when the exception occurs on at least one secondary node in the first secondary node group.

4. The method according to any one of claims 1 to 3, wherein before sending the first uplink frame in the first time period, the method further comprises:
receiving a second uplink frame that carries second exception information, wherein the second exception information indicates that a second exception occurs on a second secondary node; and
sending the first uplink frame in the first time period comprises:
when a reporting priority of the first exception is higher than a reporting priority of the second exception, sending the first uplink frame in the first time period.

5. The method according to claim 4, wherein the second secondary node and the first secondary node belong to a same secondary node group.

6. The method according to any one of claims 1 to 5, wherein the first uplink frame comprises a first exception indication field, and the first exception indication field carries the first exception information.

7. The method according to any one of claims 1 to 3, wherein the first uplink frame comprises a second exception indication field and a third exception indication field, the second exception indication field carries the first exception information, and the third exception indication field is not occupied or the third exception indication field carries third exception information indicating that a third exception occurs on a third secondary node.

8. The method according to claim 7, wherein before sending the first uplink frame in the first time period, the method further comprises:
receiving a third uplink frame, wherein the third uplink frame comprises the second exception indication field and the third exception indication field; and
sending the first uplink frame in the first time period comprises:
when the second exception indication field is not occupied and the third exception indication field carries the third exception information, sending the first uplink frame in the first time period, wherein
the third exception indication field of the first uplink frame carries the third exception information.

9. The method according to claim 7 or 8, wherein the third secondary node and the first secondary node belong to a same secondary node group, or the third secondary node and the first secondary node belong to different node groups.

10. The method according to any one of claims 7 to 9, wherein when the third exception indication field is not occupied, a value of the third exception indication field is a specific value; or when the third exception indication field carries the first exception information, the value of the third exception indication field is a non-specific value.

11. The method according to any one of claims 6 to 10, wherein the method further comprises:
receiving a first downlink frame, wherein the first downlink frame comprises an indication bit; and the indication bit indicates that a first field in an uplink frame is used to carry information about an exception of a secondary node, or indicates that the first field is used to carry uplink information of a specific secondary node.

12. The method according to any one of claims 1 to 3, wherein the first uplink frame comprises a fourth exception indication field, the fourth exception indication field carries the first exception information, and the fourth exception indication field is further used to carry information about an exception of another secondary node.

13. The method according to claim 12, wherein the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

14. The method according to claim 12 or 13, wherein before sending the first uplink frame in the first time period, the method further comprises:
receiving a fourth uplink frame, wherein the fourth uplink frame comprises the fourth exception indication field, the fourth exception indication field carries fourth exception information, and the fourth exception information indicates that a fourth exception occurs on a fourth secondary node; and
sending the first uplink frame in the first time period comprises:
sending, in the first time period by using the fourth exception indication field, the first uplink frame that carries the first exception information and the fourth exception information.

15. The method according to claim 14, wherein the fourth secondary node and the first secondary node belong to a same secondary node group.

16. The method according to any one of claims 1 to 15, wherein the method further comprises:
receiving a fifth uplink frame, wherein the fifth uplink frame carries fifth exception information, and the fifth exception information indicates that a fifth exception occurs on a fifth secondary node; and
when the fifth uplink frame does not comprise an idle field used to carry the first exception information, sending a sixth uplink frame, wherein the sixth uplink frame carries the fifth exception information.

17. The method according to claim 16, wherein the fifth uplink frame and the sixth uplink frame comprise at least one exception indication field and a second field, the at least one exception indication field carries the fifth exception information, the second field carries sixth exception information, and the sixth exception information indicates that a sixth exception occurs on a sixth secondary node; or the second field is used to carry uplink information of a specific secondary node.

18. The method according to claim 16, wherein the fifth uplink frame and the sixth uplink frame comprise at least two exception indication fields, one of the at least two exception indication fields carries the fifth exception information, at least one of remaining fields of the at least two exception indication fields is not occupied, and sending the sixth uplink frame comprises:
sending the sixth uplink frame when the fifth secondary node and the first secondary node belong to different secondary node groups.

19. The method according to any one of claims 16 to 18, wherein sending the sixth uplink frame comprises:
sending the sixth uplink frame in a second time period, wherein the second time period is associated with the fifth secondary node.

20. The method according to any one of claims 1 to 19, wherein the method further comprises:
determining that a seventh exception occurs on the first secondary node;
receiving a seventh uplink frame, wherein the seventh uplink frame indicates that an eighth exception occurs on the sixth secondary node; and
when a reporting priority of the seventh exception is lower than or equal to a reporting priority of the eighth exception, and the seventh uplink frame does not comprise an idle field used to carry information indicating the seventh exception, sending an eighth uplink frame in a third time period, wherein the eighth uplink frame indicates the eighth exception, and the third time period is associated with the first secondary node.

21. The method according to any one of claims 1 to 20, wherein the first exception comprises at least one of the following:
an exception of information transmission of the first secondary node, an exception of a parameter of the first secondary node, and an exception of a peripheral device associated with the first secondary node.

22. The method according to any one of claims 1 to 21, wherein the first exception information further indicates the reporting priority of the first exception and/or a type of the first exception.

23. A communication method, applied to a first secondary node, wherein the method comprises:
determining that a first exception occurs, wherein the first exception is associated with the first secondary node; and
sending a first uplink frame, wherein the first uplink frame carries an exception indication field, the exception indication field indicates whether exceptions occur on at least two secondary nodes, the exception indication field carries first exception information, and the first exception information indicates that the first exception occurs.

24. The method according to claim 23, wherein the first uplink frame comprises a second exception indication field and a third exception indication field, the second exception indication field carries the first exception information, and the third exception indication field is not occupied or the third exception indication field carries third exception information indicating that a third exception occurs on a third secondary node.

25. The method according to claim 24, wherein before sending the first uplink frame, the method further comprises:
receiving a third uplink frame, wherein the third uplink frame comprises the second exception indication field and the third exception indication field; and
sending the first uplink frame comprises:
when the second exception indication field carries second exception information indicating that a second exception occurs on a second secondary node, the third exception indication field carries the third exception information, and a reporting priority of the first exception is higher than a reporting priority of the second exception, sending the first uplink frame; or
when the second exception indication field is not occupied and the third exception indication field carries the third exception information, sending the first uplink frame, wherein
the third exception indication field of the first uplink frame carries the third exception information.

26. The method according to claim 24 or 25, wherein when the second exception indication field is not occupied, a value of the second exception indication field is a specific value; or when the second exception indication field carries the first exception information or the second exception information, the value of the second exception indication field is a non-specific value.

27. The method according to any one of claims 23 to 26, wherein the method further comprises:
receiving a first downlink frame, wherein the first downlink frame comprises an indication bit; and the indication bit indicates that a first field in an uplink frame is used to carry information about an exception of a secondary node, or indicates that the first field is used to carry uplink information of a specific secondary node.

28. The method according to claim 23, wherein the first uplink frame comprises a fourth exception indication field, the fourth exception indication field carries the first exception information, and the fourth exception indication field is further used to carry information about an exception of another secondary node.

29. The method according to claim 28, wherein the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

30. The method according to claim 28 or 29, wherein before sending the first uplink frame, the method further comprises:
receiving a fourth uplink frame, wherein the fourth uplink frame comprises the fourth exception indication field, the fourth exception indication field carries fourth exception information, and the fourth exception information indicates that a fourth exception occurs on a fourth secondary node; and
sending the first uplink frame comprises:
sending, by using the fourth exception indication field, the first uplink frame that carries the first exception information and the fourth exception information.

31. The method according to any one of claims 23 to 30, wherein sending the first uplink frame comprises:
sending the first uplink frame in a first time period, wherein the first time period is associated with the first secondary node.

32. The method according to claim 31, wherein that the first time period is associated with the first secondary node comprises: the first time period is determined based on an attribute of the first secondary node, and the attribute comprises at least one of the following: an identifier of the first secondary node, a service type of the first secondary node, and a topological location of the first secondary node.

33. The method according to claim 31 or 32, wherein that the first time period is associated with the first secondary node comprises: the first time period is comprised in an exception reporting cycle of the first secondary node group, the first secondary node group comprises the first secondary node, and an exception is reported in the exception reporting cycle when the exception occurs on at least one secondary node in the first secondary node group.

34. The method according to any one of claims 23 to 33, wherein the method further comprises:
receiving a fifth uplink frame, wherein all exception indication fields that are in the fifth uplink frame and that indicate that exceptions occur on secondary nodes have been occupied; and
when the fifth uplink frame does not comprise an idle field used to carry the first exception information, sending a sixth uplink frame, wherein the sixth uplink frame carries the fifth exception information.

35. The method according to claim 34, wherein reporting priorities of the exceptions indicated in the fifth uplink frame are all higher than or equal to the reporting priority of the first exception.

36. The method according to any one of claims 23 to 35, wherein the first exception comprises at least one of the following:
an exception of information transmission of the first secondary node, an exception of a parameter of the first secondary node, and an exception of a peripheral device associated with the first secondary node.

37. The method according to any one of claims 23 to 36, wherein the first exception information further indicates the reporting priority of the first exception and/or a type of the first exception.

38. A communication method, comprising:
receiving a first uplink frame in a first time period, wherein the first uplink frame carries first exception information, the first exception information indicates that a first exception occurs, the first exception is associated with a first secondary node, and the first time period is associated with the first secondary node; and
determining, based on the first exception information, that the first exception occurs.

39. The method according to claim 38, wherein that the first time period is associated with the first secondary node comprises: the first time period is determined based on an attribute of the first secondary node, and the attribute comprises at least one of the following: an identifier of the first secondary node, a service type of the first secondary node, and a topological location of the first secondary node.

40. The method according to claim 38 or 39, wherein that the first time period is associated with the first secondary node comprises: the first time period is comprised in an exception reporting cycle of a first secondary node group, the first secondary node group comprises the first secondary node, and an exception is reported in the exception reporting cycle when the exception occurs on at least one secondary node in the first secondary node group.

41. The method according to any one of claims 38 to 40, wherein receiving the first uplink frame in the first time period comprises:
when a second exception occurs on a second secondary node, and a reporting priority of the second exception is lower than a reporting priority of the first exception, receiving the first uplink frame in the first time period, wherein the first secondary node and the second secondary node belong to a same secondary node group.

42. The method according to any one of claims 38 to 41, wherein the first uplink frame comprises a first exception indication field, and the first exception indication field carries the first exception information.

43. The method according to any one of claims 38 to 40, wherein the first uplink frame comprises a second exception indication field and a third exception indication field, the second exception indication field carries the first exception information, and the third exception indication field carries third exception information indicating that a third exception occurs on a third secondary node, or the third exception indication field is not occupied.

44. The method according to claim 43, wherein the third secondary node and the first secondary node belong to a same secondary node group, or the third secondary node and the first secondary node belong to different node groups.

45. The method according to claim 43 or 44, wherein when the third exception indication field is not occupied, a value of the third exception indication field is a specific value; or when the third exception indication field carries the third exception information, the value of the third exception indication field is a non-specific value.

46. The method according to any one of claims 42 to 45, wherein the method further comprises:
sending a first downlink frame, wherein the first downlink frame comprises an indication bit; and the indication bit indicates that a first field in an uplink frame is used to carry information about an exception of a secondary node, or indicates that the first field is used to carry uplink information of a specific secondary node.

47. The method according to any one of claims 38 to 40, wherein the first uplink frame comprises a fourth exception indication field, the fourth exception indication field carries the first exception information, and the fourth exception indication field is further used to carry information about an exception of another secondary node.

48. The method according to claim 47, wherein the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

49. The method according to any one of claims 38 to 48, wherein the method further comprises:
receiving a sixth uplink frame in a second time period, wherein the sixth uplink frame carries fifth exception information, the fifth exception information indicates that a fifth exception occurs on a fifth secondary node, the second time period is associated with the fifth secondary node, and the fifth secondary node and the first secondary node belong to different secondary node groups.

50. The method according to any one of claims 38 to 49, wherein the first exception comprises at least one of the following:
an exception of information transmission of the first secondary node, an exception of a parameter of the first secondary node, and an exception of a peripheral device associated with the first secondary node.

51. The method according to any one of claims 38 to 50, wherein the first exception information further indicates the reporting priority of the first exception and/or a type of the first exception.

52. A communication method, comprising:
receiving a first uplink frame, wherein the first uplink frame carries an exception indication field, the exception indication field indicates whether exceptions occur on at least two secondary nodes, the exception indication field carries first exception information, the first exception information indicates that a first exception occurs, and the first exception is associated with a first secondary node; and
determining, based on the first exception information, that the first exception occurs.

53. The method according to claim 52, wherein the first uplink frame comprises a second exception indication field and a third exception indication field, the second exception indication field carries the first exception information, and the third exception indication field carries third exception information indicating that a third exception occurs on a third secondary node, or the third exception indication field is not occupied.

54. The method according to claim 53, wherein when the third exception indication field is not occupied, a value of the third exception indication field is a specific value; or when the third exception indication field carries the third exception information, the value of the third exception indication field is a non-specific value.

55. The method according to any one of claims 52 to 54, wherein the method further comprises:
sending a first downlink frame, wherein the first downlink frame comprises an indication bit; and the indication bit indicates that a first field in an uplink frame is used to carry information about an exception of a secondary node, or indicates that the first field is used to carry uplink information of a specific secondary node.

56. The method according to claim 52, wherein the first uplink frame comprises a fourth exception indication field, the fourth exception indication field carries the first exception information, and the fourth exception indication field is further used to carry information about an exception of another secondary node.

57. The method according to claim 56, wherein the fourth exception indication field carries P bits, and each of the P bits corresponds to one secondary node; and when the fourth exception indication field carries information about an exception of at least one secondary node, a value of a bit that is in the P bits and that corresponds to the at least one secondary node is a first value, a value of a remaining bit in the P bits is a second value, and P is an integer greater than or equal to 2.

58. The method according to any one of claims 52 to 57, wherein receiving the first uplink frame comprises:
receiving the first uplink frame in a first time period, wherein the first time period is associated with the first secondary node.

59. The method according to claim 58, wherein that the first time period is associated with the first secondary node comprises: the first time period is determined based on an attribute of the first secondary node, and the attribute comprises at least one of the following: an identifier of the first secondary node, a service type of the first secondary node, and a topological location of the first secondary node.

60. The method according to claim 58 or 59, wherein that the first time period is associated with the first secondary node comprises: the first time period is comprised in an exception reporting cycle of the first secondary node group, the first secondary node group comprises the first secondary node, and an exception is reported in the exception reporting cycle when the exception occurs on at least one secondary node in the first secondary node group.

61. The method according to any one of claims 52 to 60, wherein the first exception comprises at least one of the following:
an exception of information transmission of the first secondary node, an exception of a parameter of the first secondary node, and an exception of a peripheral device associated with the first secondary node.

62. The method according to any one of claims 52 to 61, wherein the first exception information further indicates a reporting priority of the first exception and/or a type of the first exception.

63. A communication apparatus, wherein the apparatus comprises a processing unit and a transceiver unit, configured to perform the method according to any one of claims 1 to 37.

64. A communication apparatus, wherein the apparatus comprises a transceiver unit and a processing unit, configured to perform the method according to any one of claims 38 to 62.

65. A communication apparatus, comprising:
a memory, configured to store a computer program; and
a processor, configured to execute the computer program stored in the memory, so that the control apparatus performs the method according to any one of claims 1 to 37.

66. A communication apparatus, comprising:
a memory, configured to store a computer program; and
a processor, configured to execute the computer program stored in the memory, so that the control apparatus performs the method according to any one of claims 38 to 62.

67. A communication system, comprising the apparatuses according to claims 63 and 64, or comprising the apparatuses according to claims 65 and 66.

68. A vehicle, comprising the apparatuses according to claims 63 and 64, or comprising the apparatuses according to claims 65 and 66, or comprising the system according to claim 67.

69. A computer-readable storage medium, wherein the computer-readable storage medium stores instructions, and when the instructions are executed by a processor, the processor is enabled to implement the method according to any one of claims 1 to 62.

70. A chip, wherein the chip comprises a circuit, and the circuit is configured to perform the method according to any one of claims 1 to 62.
